# EUROPEAN PATENT APPLICATION

(11) **EP 4 741 162 A1**
(43) Date of publication of application: **13.05.2026**
(21) Application number: 24845566.9
(22) Date of filing: 19.07.2024
(51) Int. Cl.: B32B 27/32, B32B 9/00, B32B 27/00, B65D 65/40

(54) **GAS BARRIER FILM, MULTILAYER BODY, AND PACKAGING MATERIAL**

(30) Priority: 27.07.2023 JP 2023122189; 27.07.2023 JP 2023122220
(71) Applicant: Toppan Holdings Inc., Tokyo 110-0016 (JP)
(72) Inventor: ISHII Megumi, Tokyo 110-0016 (JP); TAKEI Ryo, Tokyo 110-0016 (JP); KAMEGAWA Yuki, Tokyo 110-0016 (JP); KATO Ryoji, Tokyo 110-0016 (JP); YAMADA Mikinori, Tokyo 110-0016 (JP)
(74) Representative: Wagner & Geyer
(86) International application number: PCT/JP2024/026025
(87) International publication number: WO 2025/023190

(57) **Abstract**

A gas barrier film includes a multilayer polyethylene film and a gas barrier layer, wherein the multilayer polyethylene film has a surface layer, an intermediate layer, and a back layer in this order, the surface layer is provided between the intermediate layer and the gas barrier layer, the surface layer is composed of a medium-density polyethylene resin or a high-density polyethylene resin having a density of 0.926 g/cm³ or more, a complex modulus of the surface layer and the back layer is 1.45 GPa or more and less than 1.90 GPa, a complex modulus of the intermediate layer is 1.80 GPa or more and less than 2.50 GPa, a ratio of a thickness of the intermediate layer to a total thickness of the surface layer and the back layer is 0.5 or more, a temperature indicated by a maximum value of a melting peak of the multilayer polyethylene film is more than 129°C and less than 136°C, and the gas barrier layer has at least one of an inorganic oxide layer and a gas barrier coating layer.

## Description

### Technical Field

The present disclosure relates to a gas barrier film, a multilayer body, and a packaging material.

### Background Art

Packaging materials used for packaging foods, pharmaceuticals, and the like are required to have a property of preventing the entry of gases (water vapor, oxygen, etc.) that cause deterioration of the packaged goods (gas barrier property) in order to suppress alteration, spoilage, etc. of the packaged goods and maintain their functions and quality. In addition, since packaging materials are sometimes subjected to a heat sterilization treatment such as a boiling treatment, excellent heat resistance is required. Therefore, a multilayer body (gas barrier film) having a gas barrier property and heat resistance is used for these packaging materials.

As a gas barrier film, one is known in which a gas barrier layer made of a material having a gas barrier property is provided on the surface of a resin substrate. As the gas barrier layer, a metal foil, a metal-deposited film, a coating film formed by a wet coating method, and the like are known. As the resin substrate, a polyolefin film such as a polyethylene film is known. For example, Patent Literature 1 describes an aluminum-deposited polyethylene film characterized by having an aluminum-deposited film on the surface of an unstretched polyethylene film with a thickness of less than 30 µm, which is made of linear low-density polyethylene produced by using a metallocene catalyst.

In addition, it has been studied to improve the properties of a gas barrier film by making the resin substrate a multilayer body having a plurality of resin layers. For example, Patent Literature 2 describes a film that can suppress the occurrence of wrinkles, which includes a resin layer including a first surface and a second surface, and a vapor-deposited layer provided on the second surface of the resin layer, wherein the resin layer includes a first layer constituting the first surface, and at least one hard layer having a density higher than the density of the first layer and having a density of 0.934 g/cm³ or more, and the total thickness of the hard layer is 60% or more of the total thickness of the resin layer.

### Citation List

### Patent Literature

Patent Literature 1: Japanese Unexamined Patent Publication No. 2001-179878
Patent Literature 2: Japanese Unexamined Patent Publication No. 2018-24213

### Summary of Invention

### Technical Problem

However, in recent years, due to growing environmental awareness stemming from issues such as marine plastic waste, there has been a demand for further efficiency in the separate collection and recycling of plastic materials, and mono-materialization has also come to be required for packaging materials.

However, in the course of studying the mono-materialization of gas barrier films, the present inventors found that depending on the type of polyethylene resin constituting each layer of the polyethylene film, wrinkles may occur on the surface of the polyethylene film, making it difficult to form a gas barrier layer, or it may be difficult to impart sufficient transparency and heat resistance.

Therefore, an object of one aspect of the present disclosure is to provide a gas barrier film having excellent processing stability when providing a gas barrier layer, excellent transparency, and excellent heat resistance that can maintain the gas barrier property even after a heat sterilization treatment.

### Solution to Problem

One aspect of the present disclosure includes the following [1] to [15].
[1] A gas barrier film having a laminated structure that includes a multilayer polyethylene film and a gas barrier layer, wherein
   the multilayer polyethylene film has a surface layer, an intermediate layer, and a back layer in this order, the surface layer is provided between the intermediate layer and the gas barrier layer,
   the surface layer is composed of a medium-density polyethylene resin or a high-density polyethylene resin having a density of 0.926 g/cm³ or more,
   a complex modulus of the surface layer and the back layer is 1.45 GPa or more and less than 1.90 GPa,
   a complex modulus of the intermediate layer is 1.80 GPa or more and less than 2.50 GPa, and
   the gas barrier layer has at least one of an inorganic oxide layer and a gas barrier coating layer.
[2] The gas barrier film according to [1], wherein a density of the multilayer polyethylene film is 0.940 g/cm³ or more.
[3] The gas barrier film according to [1] or [2], wherein
   the gas barrier layer has the inorganic oxide layer, and
   the inorganic oxide layer includes at least one of aluminum oxide and silicon oxide.
[4] The gas barrier film according to any one of [1] to [3], wherein
   the gas barrier layer has the gas barrier coating layer, and
   the gas barrier coating layer includes a water-soluble polymer and at least one selected from the group consisting of a metal alkoxide, a hydrolysate thereof, and a reaction product thereof.
[5] The gas barrier film according to any one of [1] to [4], wherein
   the gas barrier layer has the gas barrier coating layer, and
   the gas barrier coating layer includes at least one selected from the group consisting of a silane coupling agent, a hydrolysate thereof, and a reaction product thereof.
[6] The gas barrier film according to any one of [1] to [5], wherein
   the gas barrier layer has the gas barrier coating layer, and
   the gas barrier coating layer includes a polyvalent metal salt of carboxylic acid.
[7] The gas barrier film according to any one of [1] to [6], wherein a ratio of a thickness of the intermediate layer to a total thickness of the surface layer and the back layer is 0.5 or more.
[8] The gas barrier film according to any one of [1] to [8], wherein a thickness of the intermediate layer is 33% or more of a thickness of the multilayer polyethylene film.
[9] The gas barrier film according to any one of [1] to [8], wherein a temperature indicated by a maximum value of a melting peak observed in differential scanning calorimetry of the multilayer polyethylene film is more than 129°C and less than 136°C.
[10] A multilayer body that includes:
   the gas barrier film according to any one of [1] to [9];
   an adhesive layer disposed on a surface of the gas barrier layer opposite the multilayer polyethylene film; and
   a sealant layer disposed via the adhesive layer, wherein
   an absolute value of a degree of molecular orientation of the multilayer polyethylene film is less than 1.07.
[11] The multilayer body according to [10], wherein a content of polyethylene resin in the multilayer body is 90 mass% or more based on a total amount of the multilayer body.
[12] The multilayer body according to [10] or [11], further including a gas barrier coating layer on a surface of the inorganic oxide layer on the sealant layer side.
[13] The multilayer body according to any one of [10] to [12], wherein the adhesive layer includes a gas barrier adhesive.
[14] The multilayer body according to any one of [10] to [13], further including:
   a second adhesive layer disposed on a surface of the multilayer polyethylene film on the back layer side; and
   a base material disposed via the second adhesive layer.
[15] A packaging material including the multilayer body according to any one of [10] to [14].

### Advantageous Effects of Invention

According to one aspect of the present disclosure, it is possible to provide a gas barrier film having excellent processing stability when providing a gas barrier layer, excellent transparency, and excellent heat resistance that can maintain the gas barrier property even after a heat sterilization treatment.

### Brief Description of Drawings

Fig. 1 is a cross-sectional view of a gas barrier film according to one embodiment of the present disclosure.
Fig. 2 is a cross-sectional view of a gas barrier film according to another embodiment of the present disclosure.
Fig. 3 is a cross-sectional view of a gas barrier film according to another embodiment of the present disclosure.
Fig. 4 is a cross-sectional view of a multilayer body according to one embodiment of the present disclosure.
Fig. 5 is a cross-sectional view of a multilayer body according to another embodiment of the present disclosure.
Fig. 6 is a cross-sectional view of a multilayer body according to another embodiment of the present disclosure.
Fig. 7 is a cross-sectional view of a multilayer body according to another embodiment of the present disclosure.

### Description of Embodiments

Hereinafter, embodiments of the present disclosure will be described in detail with reference to the drawings. The drawings are schematic, and for example, the relationship between the thickness and the planar dimensions, and the ratio of the thickness of each layer are different from the actual ones. In addition, the embodiments shown below are examples of configurations for embodying the technical idea of the present disclosure, and the technical idea of the present disclosure is not limited to the materials, shapes, structures, etc. of the components described below.

### [Gas Barrier Film]

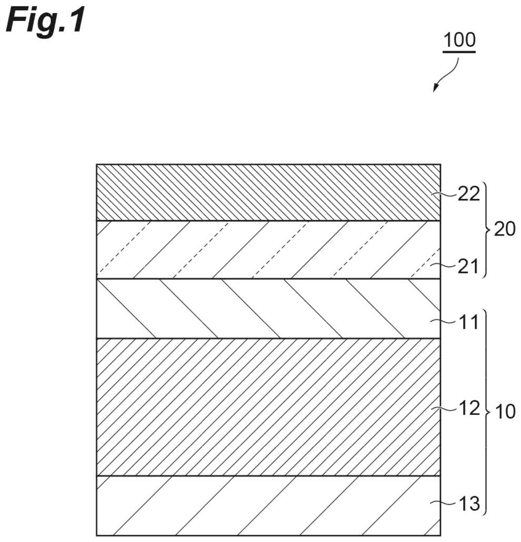

Fig. 1 is a cross-sectional view of a gas barrier film according to one embodiment of the present disclosure. The gas barrier film 100 has a laminated structure that includes at least a multilayer polyethylene film 10 and a gas barrier layer 20.

The content of polyethylene resin in the gas barrier film 100 may be 90 mass% or more, or 95 mass% or more, based on the total amount of the gas barrier film 100, from the viewpoint of achieving mono-materialization and excellent recyclability.

The thickness of the gas barrier film 100 may be 5 µm or more, 10 µm or more, or 15 µm or more from the viewpoint of easily achieving excellent heat resistance and from the viewpoint of easy and stable production, and may be 100 µm or less, 60 µm or less, or 40 µm or less from the viewpoint of cost. From these viewpoints, the thickness of the gas barrier film 100 may be 5 to 100 µm, 10 to 60 µm, or 15 to 40 µm.

### <Multilayer Polyethylene Film>

The multilayer polyethylene film 10 includes a surface layer 11, an intermediate layer 12, and a back layer 13 in this order. The surface layer 11 is provided between the intermediate layer 12 and the gas barrier layer 20. The surface layer 11 and the back layer 13 are each an outermost layer of the multilayer polyethylene film 10.

The content of polyethylene resin in the multilayer polyethylene film 10 may be 90 mass% or more, or 95 mass% or more, based on the total amount of the multilayer polyethylene film 10, from the viewpoint of achieving mono-materialization and excellent recyclability.

The density of the multilayer polyethylene film 10 may be 0.935 g/cm³ or more, 0.940 g/cm³ or more, 0.945 g/cm³ or more, 0.950 g/cm³ or more, or 0.955 g/cm³ or more, from the viewpoints that wrinkles are less likely to occur and processing stability is more excellent, and that the gas barrier property and adhesion are more easily maintained even after a heat sterilization treatment and heat resistance is more excellent. The density of the multilayer polyethylene film 10 may be 0.980 g/cm³ or less, 0.975 g/cm³ or less, 0.970 g/cm³ or less, 0.965 g/cm³ or less, or 0.960 g/cm³ or less, from the viewpoints that wrinkles are less likely to occur and processing stability is more excellent, and that the gas barrier property and adhesion are more easily maintained even after a heat sterilization treatment and heat resistance is more excellent. From these viewpoints, the density of the multilayer polyethylene film 10 may be 0.935 to 0.980 g/cm³, 0.940 to 0.975 g/cm³, 0.945 to 0.970 g/cm³, 0.950 to 0.965 g/cm³, or 0.955 to 0.960 g/cm³.

The multilayer polyethylene film 10 may be unstretched. That the multilayer polyethylene film 10 is unstretched means that the absolute value of the degree of molecular orientation of the multilayer polyethylene film is less than 1.07. When the multilayer polyethylene film 10 is unstretched (the absolute value of the degree of molecular orientation is less than 1.07), the gas barrier layer 20 is less likely to peel off in the vicinity of the surface layer 11 of the multilayer polyethylene film 10, and the adhesion to the gas barrier layer 20 tends to be excellent. The absolute value of the degree of molecular orientation may be 1 or more, 1.02 or more, or 1.04 or more. From these viewpoints, the absolute value of the degree of molecular orientation may be 1 or more and less than 1.07, 1.02 or more and less than 1.07, or 1.04 or more and less than 1.07. The absolute value of the degree of molecular orientation means the absolute value of the degree of molecular orientation of molecular chains in the plane of the multilayer polyethylene film, which is measured by rotating the multilayer polyethylene film in a microwave polarized electric field using a microwave-type molecular orientation meter (for example, MOA-5012A manufactured by Oji Scientific Instruments Co., Ltd.).

The thickness of the multilayer polyethylene film 10 is not particularly limited and can be appropriately determined according to cost and application, while considering its suitability as a packaging material and its suitability for lamination with other layers. The thickness of the multilayer polyethylene film 10 may be 3 µm or more, 5 µm or more, 6 µm or more, or 10 µm or more from the viewpoint of improving processability, and may be 200 µm or less, 120 µm or less, 100 µm or less, or 40 µm or less from the viewpoints of thinning the packaging material and heat resistance. From these viewpoints, the thickness of the multilayer polyethylene film 10 may be 3 to 200 µm, 5 to 120 µm, 6 to 100 µm, or 10 to 40 µm.

### (Surface Layer)

The surface layer 11 is a layer composed of a medium-density polyethylene resin or a high-density polyethylene resin of 0.926 g/cm³ or more. Since the surface layer 11 is composed of a medium-density polyethylene resin or a high-density polyethylene resin having a density of 0.926 g/cm³ or more, the multilayer polyethylene film 10 has excellent heat resistance. In this specification, the high-density polyethylene resin means a polyethylene resin having a density of 0.942 g/cm³ or more. Hereinafter, the polyethylene resin constituting the surface layer 11 is also referred to as a first polyethylene resin.

The content of the first polyethylene resin in the surface layer 11 may be 90 mass% or more, 95 mass% or more, or 98 mass% or more, based on the total amount of the surface layer 11, from the viewpoint of achieving mono-materialization and excellent recyclability, and may be 100 mass% (an embodiment in which the surface layer 11 substantially consists of the first polyethylene resin). When the surface layer 11 is composed of a plurality of polyethylene resins (for example, a plurality of polyethylene resins having different average molecular weights, densities, etc.), a mixture of the plurality of polyethylene resins is regarded as the first polyethylene resin.

The surface layer 11 may be composed of a first polyethylene resin having a density in the following range, from the viewpoints that wrinkles are less likely to occur and processing stability is more excellent, and that the gas barrier property is more easily maintained even after a heat sterilization treatment and heat resistance is more excellent. The density of the first polyethylene resin may be 0.930 g/cm³ or more, 0.935 g/cm³ or more, or 0.940 g/cm³ or more. The density of the first polyethylene resin may be 0.970 g/cm³ or less, 0.965 g/cm³ or less, or 0.960 g/cm³ or less. In particular, when the density of the first polyethylene resin is 0.960 g/cm³ or less, roughening of the surface of the multilayer polyethylene film 10 and generation of resin powder can be suppressed, and it becomes easy to achieve an excellent gas barrier property. From these viewpoints, the density of the first polyethylene resin may be 0.930 to 0.970 g/cm³, 0.935 to 0.965 g/cm³, or 0.940 to 0.960 g/cm³.

The complex modulus of the surface layer 11 is 1.45 GPa or more and less than 1.90 GPa. When the complex modulus of the surface layer 11 is 1.45 GPa or more and less than 1.90 GPa, the transparency and gas barrier property of the multilayer polyethylene film 10 are excellent. The complex modulus of the surface layer 11 can be measured by a nanoindentation method, and specifically, can be measured by the method described in the Examples below.

The complex modulus of the surface layer 11 may be 1.50 GPa or more, 1.55 GPa or more, or 1.60 GPa or more from the viewpoint of more excellent transparency and gas barrier property, and may be 1.85 GPa or less, 1.80 GPa or less, or 1.75 GPa or less from the viewpoint of more excellent transparency and gas barrier property. From these viewpoints, the complex modulus of the surface layer 11 may be 1.50 to 1.85 GPa, 1.55 to 1.80 GPa, or 160 to 1.75 GPa.

The melt flow rate MFR₁ of the first polyethylene resin at 190°C and a load of 2.16 kg is not particularly limited and can be appropriately adjusted by the method for producing the first polyethylene resin. The melt flow rate MFR₁ of the first polyethylene resin at 190°C and a load of 2.16 kg may be 5 g/10 min or less, 3 g/10 min or less, or 1.5 g/10 min or less, from the viewpoints that wrinkles are less likely to occur and processing stability is more excellent, and that the gas barrier property and adhesion are more easily maintained even after a heat sterilization treatment and heat resistance is more excellent. The MFR₁ of the first polyethylene resin may be 0.1 g/10 min or more or 0.3 g/10 min or more, from the viewpoints that wrinkles are less likely to occur and processing stability is more excellent, and that the gas barrier property and adhesion are more easily maintained even after a heat sterilization treatment and heat resistance is more excellent. From these viewpoints, the MFR₁ of the first polyethylene resin may be 0.1 to 5 g/10 min, 0.1 to 3 g/10 min, or 0.3 to 1.5 g/10 min. In this specification, the melt flow rate means a value measured in accordance with JIS K6921-2.

The thickness of the surface layer 11 is not particularly limited and can be appropriately determined according to cost and application, while considering suitability derived from the production method and apparatus, and suitability for lamination with other layers. The thickness of the surface layer 11 may be 1 µm or more, 2 µm or more, 3 µm or more, 4 µm or more, or 5 µm or more from a practical viewpoint, and may be 50 µm or less, 30 µm or less, 20 µm or less, or 10 µm or less from the viewpoint of thinning the packaging material. From these viewpoints, the thickness of the surface layer 11 may be 1 to 50 µm, 2 to 30 µm, 3 to 20 µm, 4 to 10 µm, or 5 to 50 µm.

### (Intermediate Layer)

The intermediate layer 12 is a layer containing a polyethylene resin. Hereinafter, the polyethylene resin constituting the intermediate layer 12 is also referred to as a second polyethylene resin. The content of the second polyethylene resin in the intermediate layer 12 may be 90 mass% or more, 95 mass% or more, or 98 mass% or more, based on the total amount of the intermediate layer 12, from the viewpoint of achieving mono-materialization and excellent recyclability, and may be 100 mass% (an embodiment in which the intermediate layer 12 substantially consists of the second polyethylene resin). When the intermediate layer 12 is composed of a plurality of polyethylene resins (for example, a plurality of polyethylene resins having different average molecular weights, densities, etc.), a mixture of the plurality of polyethylene resins is regarded as the second polyethylene resin.

The intermediate layer 12 may be composed of a second polyethylene resin having a density in the following range, from the viewpoints that wrinkles are less likely to occur and processing stability is more excellent, and that the gas barrier property is more easily maintained even after a heat sterilization treatment and heat resistance is more excellent. The density of the second polyethylene resin may be 0.940 g/cm³ or more, 0.945 g/cm³ or more, or 0.950 g/cm³ or more. The density of the second polyethylene resin may be 0.980 g/cm³ or less, 0.975 g/cm³ or less, 0.970 g/cm³ or less, or 0.965 g/cm³ or less. From these viewpoints, the density of the second polyethylene resin may be 0.940 to 0.980 g/cm³, 0.945 to 0.975 g/cm³, or 0.950 to 0.965 g/cm³.

The complex modulus of the intermediate layer 12 is 1.80 GPa or more and less than 2.50 GPa. When the complex modulus of the intermediate layer 12 is 1.80 GPa or more and less than 2.50 GPa, wrinkles are less likely to occur in the multilayer polyethylene film 10, and the transparency and gas barrier property are excellent. The complex modulus of the intermediate layer 12 can be measured by a nanoindentation method, and specifically, can be measured by the method described in the Examples below.

From the viewpoints that wrinkles are less likely to occur and transparency and gas barrier property are more excellent, the complex modulus of the intermediate layer 12 may be 1.90 GPa or more, 2.00 GPa or more, 2.05 GPa or more, 2.10 GPa or more, or 2.15 GPa or more, and from the viewpoints that wrinkles are less likely to occur and transparency and gas barrier property are more excellent, it may be 2.40 GPa or less, 2.35 GPa or less, or 2.30 GPa or less. From these viewpoints, the complex modulus of the intermediate layer 12 may be 1.90 to 2.40 GPa, 2.00 to 2.40 GPa, 2.05 to 2.35 GPa, 2.10 to 2.35 GPa, or 2.15 to 2.30 GPa.

The melt flow rate MFR₂ of the second polyethylene resin at 190°C and a load of 2.16 kg is not particularly limited and can be appropriately adjusted by the method for producing the second polyethylene resin. The melt flow rate MFR₂ of the second polyethylene resin at 190°C and a load of 2.16 kg may be 5 g/10 min or less, 3 g/10 min or less, 2 g/10 min or less, or 1.5 g/10 min or less, from the viewpoints that wrinkles are less likely to occur and processing stability is more excellent, and that the gas barrier property and adhesion are more easily maintained even after a heat sterilization treatment and heat resistance is more excellent. The MFR₂ of the second polyethylene resin may be 0.1 g/10 min or more, 0.5 g/10 min or more, or 0.8 g/10 min or more, from the viewpoints that wrinkles are less likely to occur and processing stability is more excellent, and that the gas barrier property and adhesion are more easily maintained even after a heat sterilization treatment and heat resistance is more excellent. From these viewpoints, the MFR₂ of the second polyethylene resin may be 0.1 to 5 g/10 min, 0.1 to 3 g/10 min, 0.5 to 2 g/10 min, or 0.8 to 1.5 g/10 min.

The thickness of the intermediate layer 12 is not particularly limited and can be appropriately determined according to cost and application, while considering suitability derived from the production method and apparatus, and suitability for lamination with other layers. The thickness of the intermediate layer 12 may be 5 µm or more, 8 µm or more, 10 µm or more, 12 µm or more, or 15 µm or more from a practical viewpoint, and may be 80 µm or less, 50 µm or less, 40 µm or less, or 30 µm or less from the viewpoint of thinning the packaging material. From these viewpoints, the thickness of the intermediate layer 12 may be 5 to 80 µm, 8 to 50 µm, 10 to 40 µm, 12 to 30 µm, or 15 to 80 µm.

From the viewpoint of more easily maintaining the gas barrier property even after a heat sterilization treatment and more excellent heat resistance, the ratio of the thickness of the intermediate layer 12 to the total thickness of the surface layer 11 and the back layer 13 (thickness of intermediate layer / (thickness of surface layer + thickness of back layer)) may be 0.5 or more. The ratio of the thickness of the intermediate layer 12 to the total thickness of the surface layer 11 and the back layer 13 may be 1 or more, 1.2 or more, 1.4 or more, or 1.5 or more, from the viewpoint of more easily maintaining the gas barrier property even after a heat sterilization treatment and more excellent heat resistance. The ratio of the thickness of the intermediate layer 12 to the total thickness of the surface layer 11 and the back layer 13 may be 3 or less, 2.5 or less, or 2 or less, from the viewpoint of more easily maintaining the gas barrier property even after a heat sterilization treatment and more excellent heat resistance. From these viewpoints, the ratio of the thickness of the intermediate layer 12 to the total thickness of the surface layer 11 and the back layer 13 may be 1 to 3, 1.2 to 2.5, 1.4 to 2, or 1.5 to 3.

The greater the thickness of the intermediate layer 12, the more excellent heat resistance can be achieved. The thickness of the intermediate layer 12 may be 30% or more, 33% or more, 40% or more, 50% or more, 55% or more, or 60% or more of the thickness of the multilayer polyethylene film 10, from the viewpoint of more easily maintaining the gas barrier property even after a heat sterilization treatment and more excellent heat resistance. The thickness of the intermediate layer 12 may be 80% or less, 77% or less, or 75% or less of the thickness of the multilayer polyethylene film 10. From these viewpoints, the thickness of the intermediate layer 12 may be 30 to 80%, 33 to 80%, 40 to 77%, 50 to 77%, 55 to 75%, or 60 to 75% of the thickness of the multilayer polyethylene film 10.

The greater the thickness of the intermediate layer 12, the more excellent heat resistance can be achieved. The thickness of the intermediate layer 12 may be greater than the thickness of the surface layer 11 and/or the back layer 13, from the viewpoint of more easily maintaining the gas barrier property even after a heat sterilization treatment and more excellent heat resistance. The thickness of the intermediate layer 12 may be 1 or more times, 1.5 or more times, 2 or more times, 2.5 or more times, or 3 or more times the thickness of the surface layer 11 and/or the back layer 13, from the viewpoint of more easily maintaining the gas barrier property even after a heat sterilization treatment and more excellent heat resistance. The thickness of the intermediate layer 12 may be 8 or less times, 7 or less times, 6.5 or less times, or 6 or less times the thickness of the surface layer 11 and/or the back layer 13, from the viewpoint of more easily maintaining the gas barrier property even after a heat sterilization treatment and more excellent heat resistance. From these viewpoints, the thickness of the intermediate layer 12 may be 1 to 8 times, 1.5 to 7 times, 2 to 6.5 times, 2.5 to 6 times, or 3 to 8 times the thickness of the surface layer 11 and/or the back layer 13.

### (Back Layer)

The back layer 13 is a layer containing a polyethylene resin. Hereinafter, the polyethylene resin constituting the back layer 13 is also referred to as a third polyethylene resin. The content of the third polyethylene resin in the back layer 13 may be 90 mass% or more, 95 mass% or more, or 98 mass% or more, based on the total amount of the back layer 13, from the viewpoint of achieving mono-materialization and excellent recyclability, and may be 100 mass% (an embodiment in which the back layer 13 substantially consists of the third polyethylene resin). When the back layer 13 is composed of a plurality of polyethylene resins (for example, a plurality of polyethylene resins having different average molecular weights, densities, etc.), a mixture of the plurality of polyethylene resins is regarded as the third polyethylene resin.

The back layer 13 may be composed of a third polyethylene resin having a density in the following range, from the viewpoints that wrinkles are less likely to occur and processing stability is more excellent, and that the gas barrier property and adhesion are more easily maintained even after a heat sterilization treatment and heat resistance is more excellent. The density of the third polyethylene resin may be 0.920 g/cm³ or more, 0.926 g/cm³ or more, 0.930 g/cm³ or more, 0.935 g/cm³ or more, or 0.940 g/cm³ or more. The density of the third polyethylene resin may be 0.970 g/cm³ or less, 0.965 g/cm³ or less, or 0.960 g/cm³ or less. When the density of the third polyethylene resin is 0.960 g/cm³ or less, roughening of the surface of the multilayer polyethylene film 10 and generation of resin powder can be suppressed. By suppressing the generation of resin powder, when the multilayer polyethylene film 10 is wound into a roll, adhesion of the resin powder to the surface on the surface layer 11 side of the multilayer polyethylene film 10 can be suppressed, and it becomes easy to achieve an excellent gas barrier property. From these viewpoints, the density of the third polyethylene resin may be 0.920 to 0.970 g/cm³, 0.926 to 0.970 g/cm³, 0.930 to 0.965 g/cm³, 0.935 to 0.965 g/cm³, or 0.940 to 0.960 g/cm³.

The complex modulus of the back layer 13 is 1.45 GPa or more and less than 1.90 GPa. When the complex modulus of the back layer 13 is 1.45 GPa or more and less than 1.90 GPa, the transparency and gas barrier property of the multilayer polyethylene film 10 are excellent. The complex modulus of the back layer 13 can be measured by a nanoindentation method, and specifically, can be measured by the method described in the Examples below.

The complex modulus of the back layer 13 may be 1.50 GPa or more, 1.55 GPa or more, or 1.60 GPa or more from the viewpoint of more excellent transparency and gas barrier property, and may be 1.85 GPa or less, 1.80 GPa or less, or 1.75 GPa or less from the viewpoint of more excellent transparency and gas barrier property. From these viewpoints, the complex modulus of the back layer 13 may be 1.50 to 1.85 GPa, 1.55 to 1.80 GPa, or 1.60 to 1.75 GPa.

The melt flow rate MFR₃ of the third polyethylene resin at 190°C and a load of 2.16 kg is not particularly limited and can be appropriately adjusted by the method for producing the third polyethylene resin. The melt flow rate MFR₃ of the third polyethylene resin at 190°C and a load of 2.16 kg may be 5 g/10 min or less, 3 g/10 min or less, or 1.5 g/10 min or less, from the viewpoints that wrinkles are less likely to occur and processing stability is more excellent, and that the gas barrier property and adhesion are more easily maintained even after a heat sterilization treatment and heat resistance is more excellent. The MFR₃ of the third polyethylene resin may be 0.1 g/10 min or more or 0.3 g/10 min or more, from the viewpoints that wrinkles are less likely to occur and processing stability is more excellent, and that the gas barrier property and adhesion are more easily maintained even after a heat sterilization treatment and heat resistance is more excellent. From these viewpoints, the MFR₃ of the third polyethylene resin may be 0.1 to 5 g/10 min, 0.1 to 3 g/10 min, or 0.3 to 1.5 g/10 min.

The thickness of the back layer 13 is not particularly limited and can be appropriately determined according to cost and application, while considering suitability derived from the production method and apparatus, and suitability for lamination with other layers. The thickness of the back layer 13 may be 1 µm or more, 2 µm or more, 3 µm or more, 4 µm or more, or 5 µm or more from a practical viewpoint, and may be 50 µm or less, 30 µm or less, 20 µm or less, or 10 µm or less from the viewpoint of thinning the packaging material. From these viewpoints, the thickness of the back layer 13 may be 1 to 50 µm, 2 to 30 µm, 3 to 20 µm, 4 to 10 µm, or 5 to 50 µm.

The back layer 13 may have the same configuration as the surface layer 11. That is, the multilayer polyethylene film 10 may have a symmetrical structure with respect to the intermediate layer 12. When the multilayer polyethylene film 10 has a symmetrical structure, curling during the production of the multilayer polyethylene film 10 can be suppressed, and the multilayer polyethylene film 10 can be stably produced.

The surface layer 11, the intermediate layer 12, and the back layer 13 may appropriately include resins other than polyethylene resin to the extent that recyclability is not impaired. Examples of such resins include olefin-based resins such as ethylene-vinyl acetate copolymer (EVA), ethylene-α-olefin copolymer, ethylene-(meth)acrylic acid copolymer, homopolypropylene resin (PP), propylene-ethylene random copolymer, propylene-ethylene block copolymer, propylene-α-olefin copolymer, and polybutene, polyamide, polyethylene vinyl alcohol, polyester, and various modifying resins. In addition, each may independently contain one or two or more additives. Examples of additives include cross-linking agents, antioxidants, antiblocking agents, lubricants (slip agents), ultraviolet absorbers, light stabilizers, fillers, reinforcing agents, antistatic agents, and pigments.

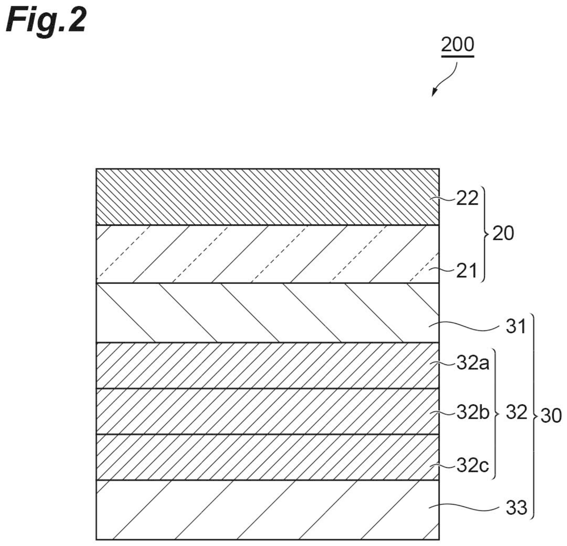

The intermediate layer 12 may be a single layer or may be formed of a plurality of layers. For example, as shown in Fig. 2, the multilayer polyethylene film 30 in the gas barrier film 200 has a surface layer 31, an intermediate layer 32, and a back layer 33, and the intermediate layer 32 has resin layers 32a, 32b, and 32c. At this time, the resin layers 32a, 32b, and 32c all have the same composition. That the intermediate layer 32 has a plurality of layers can be confirmed by observing a cross section of the multilayer polyethylene film 30 with an optical microscope or an electron microscope.

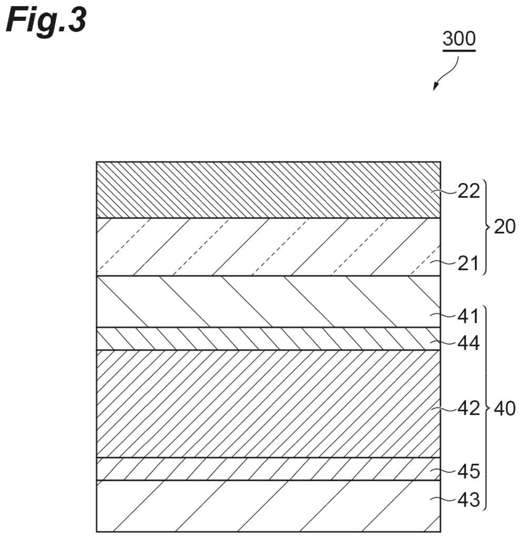

The multilayer polyethylene film 10 may include layers other than the three layers of the surface layer 11, the intermediate layer 12, and the back layer 13. For example, as shown in Fig. 3, the multilayer polyethylene film 40 in the gas barrier film 300 has a surface layer 41, an intermediate layer 42, and a back layer 43, and has a resin layer 44 between the surface layer 41 and the intermediate layer 42, and a resin layer 45 between the intermediate layer 42 and the back layer 43. The resin layer 44 is, for example, a layer that contains a polyethylene resin and has a different composition from the surface layer 41 and the intermediate layer 42. The resin layer 45 is, for example, a layer that contains a polyethylene resin and has a different composition from the intermediate layer 42 and the back layer 43. The multilayer polyethylene film may be, for example, 3 layers, 5 layers, 7 layers, or more.

The temperature indicated by the maximum value of the melting peak observed in the differential scanning calorimetry of the multilayer polyethylene film 10 may be more than 129°C and less than 136°C. When the temperature indicated by the maximum value of the melting peak is more than 129°C and less than 136°C, the processing stability is excellent. When a plurality of melting peaks exist, the temperature indicated by the maximum value of any of the melting peaks is within the above range. The temperature indicated by the maximum value of the melting peak means a value measured by the method described in the Examples below.

Each layer of the multilayer polyethylene film 10 may be composed of a polyethylene resin having a density in the following range, from the viewpoints that wrinkles are less likely to occur and processing stability is more excellent, and that the gas barrier property is more easily maintained even after a heat sterilization treatment and heat resistance is more excellent. The density of the polyethylene resin may be 0.930 g/cm³ or more, 0.940 g/cm³ or more, 0.945 g/cm³ or more, or 0.950 g/cm³ or more. The density of the polyethylene resin may be 0.980 g/cm³ or less, 0.975 g/cm³ or less, 0.970 g/cm³ or less, or 0.965 g/cm³ or less. From these viewpoints, the density of the polyethylene resin may be 0.930 to 0.980 g/cm³, 0.940 to 0.975 g/cm³, 0.945 to 0.970 g/cm³, or 0.950 to 0.965 g/cm³.

The method for producing the multilayer polyethylene film 10 is not particularly limited, and it can be produced by a known method such as an air-cooled inflation method, a water-cooled inflation method, or a T-die cast method. From the viewpoint of versatility, the multilayer polyethylene film 10 may be produced by an inflation method, or may be produced by an air-cooled inflation method. The air-cooled inflation method is a method of continuously molding a material by installing a mold having an annular lip called a ring die (or crosshead die) at the tip of an extruder and extruding the material in a tubular shape. More specifically, an air hole is provided in the center of the ring die, and the multilayer polyethylene film 10 can be produced by blowing compressed air from the air hole to inflate the tube, cooling it while pulling it with rollers called pinch rolls, and winding up the film.

The obtained multilayer polyethylene film 10 may be subjected to a surface modification treatment to improve the suitability for subsequent processes as necessary. For example, a modification treatment may be performed on the surface of the multilayer polyethylene film 10 to improve printing suitability or lamination suitability during lamination. Examples of the modification treatment include treatments that generate functional groups by oxidizing the film surface, such as a corona discharge treatment, a plasma treatment, and a flame treatment, and a modification treatment by a wet process of forming an easy-adhesion layer by coating.

### <Gas Barrier Layer>

The gas barrier layer 20 is a layer provided on the multilayer polyethylene film 10 from the viewpoint of improving the gas barrier property against water vapor and oxygen. The gas barrier layer 20 is preferably a layer having transparency. The gas barrier layer 20 has an inorganic oxide layer 21 and a gas barrier coating layer 22. The gas barrier layer 20 may have both the inorganic oxide layer 21 and the gas barrier coating layer 22, or may have only one of the inorganic oxide layer 21 and the gas barrier coating layer 22.

### (Inorganic Oxide Layer)

The inorganic oxide layer 21 includes an inorganic oxide. Examples of the inorganic oxide include aluminum oxide, silicon oxide, tin oxide, magnesium oxide, and mixtures thereof. The inorganic oxide layer 21 may include at least one selected from the group consisting of aluminum oxide, silicon oxide, and magnesium oxide, from the viewpoints of more easily maintaining the gas barrier property and adhesion even after a heat sterilization treatment and more excellent heat resistance, and more excellent transparency.

The thickness of the inorganic oxide layer 21 may be 5 to 150 nm. If the thickness of the inorganic oxide layer 21 is 5 nm or more, a layer having a uniform and sufficient film thickness can be easily formed, and a sufficient gas barrier property can be achieved. If the thickness of the inorganic oxide layer 21 is 150 nm or less, flexibility can be imparted to the inorganic oxide layer 21, and even if an external load such as bending or pulling is applied after the inorganic oxide layer 21 is formed, the occurrence of cracks in the inorganic oxide layer 21 can be suppressed. The thickness of the inorganic oxide layer 21 may be 6 nm or more, or 8 nm or more, and may be 100 nm or less, or 50 nm or less. From these viewpoints, the thickness of the inorganic oxide layer 21 may be 6 to 100 nm, or 8 to 50 nm.

The inorganic oxide layer 21 can be formed by a normal vacuum deposition method. It can also be formed by other thin film formation methods such as a sputtering method, an ion plating method, or a plasma chemical vapor deposition (CVD) method. The inorganic oxide layer 21 may be formed by a vacuum deposition method from the viewpoint of excellent productivity.

As the heating means for the vacuum deposition method, any one of an electron beam heating method, a resistance heating method, and an induction heating method can be used. The vacuum deposition method may be an electron beam heating method from the viewpoint of a wide range of selectivity of evaporation materials. From the viewpoints of improving the adhesion between the multilayer polyethylene film 10 and the inorganic oxide layer 21 and the denseness of the inorganic oxide layer 21, deposition may be performed by a plasma-assisted method, an ion beam-assisted method, or the like. From the viewpoint of improving the transparency of the inorganic oxide layer 21, deposition may be performed by reactive deposition.

### (Gas Barrier Coating Layer)

The gas barrier coating layer 22 is a layer provided for the purpose of protecting the multilayer polyethylene film 10 or the inorganic oxide layer 21 and supplementing the gas barrier property. The gas barrier coating layer 22 may include a water-soluble polymer and at least one selected from the group consisting of a metal alkoxide, a hydrolysate thereof, and a reaction product thereof. The gas barrier coating layer 22 may include at least one selected from the group consisting of a silane coupling agent, a hydrolysate thereof, and a reaction product thereof.

Examples of the water-soluble polymer include polyvinyl alcohol, polyvinylpyrrolidone, starch, methyl cellulose, carboxymethyl cellulose, and sodium alginate. The water-soluble polymer may be polyvinyl alcohol (PVA) from the viewpoint of excellent gas barrier property.

Examples of the metal alkoxide include compounds represented by the following general formula.

M(OR¹¹)ₘ(R¹²)ₙ₋ₘ ... (1)

In the above formula (1), R¹¹ and R¹² are each independently a monovalent organic group having 1 to 8 carbon atoms. R¹¹ and R¹² may each independently be an alkyl group such as a methyl group or an ethyl group. M represents an n-valent metal atom such as Si, Ti, Al, or Zr. m is an integer from 1 to n. When a plurality of R¹¹s or R¹²s exist, the R¹¹s or R¹²s may be the same or different from each other.

Examples of the metal alkoxide include tetraethoxysilane [Si(OC₂H₅)₄] and triisopropoxyaluminum [Al(O-2'-C₃H₇)₃]. The metal alkoxide may be tetraethoxysilane or triisopropoxyaluminum from the viewpoint of being relatively stable in an aqueous solvent after hydrolysis.

Examples of the silane coupling agent include compounds represented by the following general formula.

Si(OR²¹)ₚ(R²²)₃₋ₚR²³ ... (2)

In the above formula (2), R²¹ represents an alkyl group such as a methyl group or an ethyl group, R²² represents a monovalent organic group such as an alkyl group, an aralkyl group, an aryl group, an alkenyl group, an alkyl group substituted with an acryloxy group, or an alkyl group substituted with a methacryloxy group, R²³ represents a monovalent organic functional group, and p represents an integer from 1 to 3. When a plurality of R²¹s or R²²s exist, the R²¹s or R²²s may be the same or different from each other. Examples of the monovalent organic functional group represented by R²³ include a glycidoxy group, an epoxy group, a mercapto group, a hydroxyl group, an amino group, an alkyl group substituted with a halogen atom, and a monovalent organic functional group containing an isocyanate group. The silane coupling agent may be a polymer such as a dimer or trimer of the above-mentioned silane coupling agent.

Examples of the silane coupling agent include vinyltrimethoxysilane, γ-chloropropylmethyldimethoxysilane, γ-chloropropyltrimethoxysilane, 3-glycidoxypropylmethyldimethoxysilane, 3-glycidoxypropyltrimethoxysilane, 3-glycidoxypropylmethyldiethoxysilane, 3-glycidoxypropylmethyltriethoxysilane, γ-methacryloxypropyltrimethoxysilane, γ-methacryloxypropylmethyldimethoxysilane, and the like.

The gas barrier coating layer 22 can be formed by dissolving a water-soluble polymer in water or a water/alcohol mixed solvent, then mixing with a metal alkoxide, a silane coupling agent, or a hydrolysate thereof to obtain a mixed solution, applying the mixed solution to the surface of the inorganic oxide layer 21 (or the multilayer polyethylene film 10 if the inorganic oxide layer 21 is not present), and heating and drying it. Additives such as an isocyanate compound, a dispersant, a stabilizer, a viscosity modifier, and a coloring agent may be added to the mixed solution.

When the water-soluble polymer is PVA, the content of PVA in the mixed solution may be 20 to 50 mass%, or 25 to 40 mass%, based on the total solid content of the mixed solution. When the content of PVA is 20 mass% or more, it becomes easier to form the gas barrier coating layer 22. When the content of PVA is 50 mass% or less, the gas barrier property is excellent.

The gas barrier coating layer 22 may be a coating film (polyvalent metal salt of polycarboxylic acid coating film) that includes a polyvalent metal salt of polycarboxylic acid, which is a reaction product of a carboxy group of a polycarboxylic acid-based polymer and a polyvalent metal compound. The polyvalent metal salt of polycarboxylic acid coating film can be formed by applying a mixed solution of a polycarboxylic acid-based polymer and a polyvalent metal compound to the surface of the inorganic oxide layer 21 (or the multilayer polyethylene film 10 if the inorganic oxide layer 21 is not present) and heating and drying it. Alternatively, the polyvalent metal salt of polycarboxylic acid coating film may be formed by applying a coating liquid mainly composed of a polycarboxylic acid-based polymer to the surface of the inorganic oxide layer 21 (or the multilayer polyethylene film 10 if the inorganic oxide layer 21 is not present) and drying it to form a coating film, then applying a coating liquid mainly composed of a polyvalent metal compound onto the coating film and drying it to form a coating film, and causing a cross-linking reaction between these coating films.

The polycarboxylic acid-based polymer is a polymer having two or more carboxy groups in the molecule. Examples of the polycarboxylic acid-based polymer include polymers of ethylenically unsaturated carboxylic acids; copolymers of ethylenically unsaturated carboxylic acids and other ethylenically unsaturated monomers; and acidic polysaccharides having carboxyl groups in the molecule, such as alginic acid, carboxymethyl cellulose, and pectin.

Examples of the ethylenically unsaturated carboxylic acid include acrylic acid, methacrylic acid, itaconic acid, maleic acid, fumaric acid, crotonic acid, and the like. Examples of the ethylenically unsaturated monomer copolymerizable with the ethylenically unsaturated carboxylic acid include, for example, ethylene, propylene, saturated carboxylic acid vinyl esters such as vinyl acetate, alkyl acrylates, alkyl methacrylates, alkyl itaconates, vinyl chloride, vinylidene chloride, styrene, acrylamide, acrylonitrile, and the like. The polycarboxylic acid-based polymer may be one type or two or more types.

As the polymer of an ethylenically unsaturated carboxylic acid, from the viewpoint of excellent gas barrier property, it is preferably a polymer including constituent units derived from at least one monomer selected from the group consisting of acrylic acid, maleic acid, methacrylic acid, itaconic acid, fumaric acid, and crotonic acid, and more preferably a polymer including constituent units derived from at least one monomer selected from the group consisting of acrylic acid, maleic acid, methacrylic acid, and itaconic acid.

In the polymer of an ethylenically unsaturated carboxylic acid, the proportion of constituent units derived from at least one monomer selected from the group consisting of acrylic acid, maleic acid, methacrylic acid, and itaconic acid is preferably 80 mol% or more, and more preferably 90 mol% or more, based on the total amount of monomers of the polymer.

The number-average molecular weight of the polycarboxylic acid-based polymer is preferably 2,000 to 10,000,000, and more preferably 5,000 to 1,000,000. When the number-average molecular weight is 2,000 or more, the gas barrier film has sufficient water resistance, and deterioration of gas barrier property and transparency and occurrence of whitening due to moisture can be suppressed. When the number-average molecular weight is 10,000,000 or less, the viscosity of the coating liquid when forming the gas barrier coating layer 22 does not become too high, and it becomes easy to form a coating film.

When forming a coating film of a coating liquid mainly composed of a polyvalent metal compound after applying and drying a coating liquid mainly composed of a polycarboxylic acid-based polymer to form a coating film, a part of the carboxy groups of the polycarboxylic acid-based polymer may be neutralized in advance with a basic compound. By neutralizing a part of the carboxy groups of the polycarboxylic acid-based polymer in advance, water resistance and heat resistance can be further improved. The basic compound may be at least one basic compound selected from the group consisting of a polyvalent metal compound, a monovalent metal compound, and ammonia. Examples of the polyvalent metal compound include the compounds exemplified as the polyvalent metal compounds described later. Examples of the monovalent metal compound include sodium hydroxide, potassium hydroxide, and the like.

The coating liquid mainly composed of a polycarboxylic acid-based polymer may contain additives such as a cross-linking agent, a curing agent, a leveling agent, an antifoaming agent, an antiblocking agent, an antistatic agent, a dispersant, a surfactant, a softener, a stabilizer, a film-forming agent, and a thickener.

The solvent used for the coating liquid mainly composed of a polycarboxylic acid-based polymer is preferably an aqueous medium. Examples of the aqueous medium include water, a water-soluble or hydrophilic organic solvent, and mixtures thereof. The aqueous medium is one that includes water as a main component. The content of water in the aqueous medium may be 70 mass% or more, or 80 mass% or more. Examples of the water-soluble or hydrophilic organic solvent include, for example, alcohols such as methanol, ethanol, and isopropanol; ketones such as acetone and methyl ethyl ketone; ethers such as tetrahydrofuran; nitriles such as acetonitrile; cellosolves, carbitols, and the like.

The polyvalent metal compound is not particularly limited as long as it is a compound that reacts with the carboxyl groups of the polycarboxylic acid-based polymer to form a polyvalent metal salt of polycarboxylic acid, and examples include zinc oxide, magnesium oxide, magnesium methoxide, copper oxide, calcium carbonate, and the like. The polyvalent metal compound may be zinc oxide from the viewpoint of excellent gas barrier property. One or two or more types of polyvalent metal compounds may be used.

Zinc oxide is an inorganic material having ultraviolet absorption performance. When zinc oxide is in the form of particles, the average particle size of the zinc oxide particles may be 5 µm or less, 1 µm or less, or 0.1 µm or less from the viewpoints of gas barrier property, transparency, and formability of the coating film.

When applying and drying a coating liquid mainly composed of a polyvalent metal compound to form a coating film, the coating liquid may contain, in addition to the polyvalent metal compound (for example, zinc oxide particles), a solvent, a resin soluble or dispersible in the solvent, a dispersant, a softener, a stabilizer, a film-forming agent, a thickener, and the like.

Examples of the resin soluble or dispersible in the solvent include alkyd resin, melamine resin, acrylic resin, urethane resin, polyester resin, phenol resin, amino resin, fluorine resin, epoxy resin, isocyanate resin, and the like. When the coating liquid contains these resins, applicability and film-formability are improved.

As the dispersant, an anionic surfactant or a nonionic surfactant can be used. Examples of the surfactant include (poly)carboxylates, alkyl sulfate ester salts, alkylbenzene sulfonates, alkylnaphthalene sulfonates, alkyl sulfosuccinates, alkyl diphenyl ether disulfonates, alkyl phosphates, aromatic phosphate esters, polyoxyethylene alkyl ethers, polyoxyethylene alkylphenol ethers, polyoxyethylene alkyl esters, alkyl allyl sulfate ester salts, polyoxyethylene alkyl phosphate esters, sorbitan alkyl esters, glycerin fatty acid esters, sorbitan fatty acid esters, sucrose fatty acid esters, polyethylene glycol fatty acid esters, polyoxyethylene sorbitan alkyl esters, polyoxyethylene alkyl allyl ethers, polyoxyethylene derivatives, polyoxyethylene sorbitol fatty acid esters, polyoxy fatty acid esters, polyoxyethylene alkylamines, and the like. One or two or more of these surfactants may be used.

When the coating liquid mainly composed of a polyvalent metal compound includes an additive, the mass ratio of the polyvalent metal compound to the additive (polyvalent metal compound:additive) may be 30:70 to 99:1, or 50:50 to 98:2.

Examples of the solvent used for the coating liquid mainly composed of a polyvalent metal compound include water, methyl alcohol, ethyl alcohol, isopropyl alcohol, n-propyl alcohol, n-butyl alcohol, n-pentyl alcohol, dimethyl sulfoxide, dimethylformamide, dimethylacetamide, toluene, hexane, heptane, cyclohexane, acetone, methyl ethyl ketone, diethyl ether, dioxane, tetrahydrofuran, ethyl acetate, butyl acetate, and the like. From the viewpoint of applicability, the solvent may be at least one selected from the group consisting of methyl alcohol, ethyl alcohol, isopropyl alcohol, toluene, ethyl acetate, methyl ethyl ketone, and water, and from the viewpoint of film-formability, it may be at least one selected from the group consisting of methyl alcohol, ethyl alcohol, isopropyl alcohol, and water. One or two or more types of solvents may be used.

Examples of the method for applying the coating liquid include a casting method, a dipping method, a roll coating method, a gravure coating method, a screen printing method, a reverse coating method, a spray coating method, a kit coating method, a die coating method, a metering bar coating method, a chamber doctor combination coating method, a curtain coating method, and the like.

The above-described gas barrier coating layer 22 can maintain an excellent gas barrier property even after a heat sterilization treatment. Therefore, when a multilayer body in which a sealant layer is provided on the gas barrier film 100 is used as a packaging material for heat sterilization treatment, the packaging material has excellent gas barrier property and adhesion even after the heat sterilization treatment. In addition, the above-described gas barrier coating layer 22 is preferable because it has sufficient transparency, flexing resistance, and stretch resistance, and there is no risk of generating harmful substances such as dioxin.

From the viewpoint of excellent gas barrier property, the thickness of the gas barrier coating layer 22 may be 0.05 µm or more, or 0.1 µm or more. From the viewpoints of easily forming a uniform coated surface, reducing the load due to drying, and manufacturing cost, the thickness of the gas barrier coating layer 22 may be 1 µm or less, or 0.5 µm or less. From these viewpoints, the thickness of the gas barrier coating layer 22 may be 0.05 to 1 µm, or 0.1 to 0.5 µm.

### (Undercoat Layer (Anchor Coat Layer))

From the viewpoint of improving the adhesion between the multilayer polyethylene film 10 and the gas barrier layer 20, an undercoat layer (anchor coat layer; not shown) may be provided between the multilayer polyethylene film 10 and the gas barrier layer 20. By providing the undercoat layer (anchor coat layer), it becomes easier to maintain the gas barrier property and adhesion even after a heat sterilization treatment.

The undercoat layer (anchor coat layer) can be formed, for example, by a coating liquid including a resin such as an acrylic resin, an epoxy resin, an acrylic urethane-based resin, a polyester-based polyurethane resin, or a polyether-based polyurethane resin. From the viewpoints of heat resistance and interlayer adhesive strength, the undercoat layer (anchor coat layer) may be formed with a coating liquid including an acrylic urethane resin or a polyester-based polyurethane resin.

The method for applying the coating liquid to form the undercoat layer (anchor coat layer) may be a known coating method, and examples include an immersion method (dipping method); and methods using a spray, a coater, a printing machine, a brush, or the like. In addition, as for the types of coaters and printing machines used in these methods and their coating systems, examples include gravure coaters such as a direct gravure system, a reverse gravure system, a kiss reverse gravure system, and an offset gravure system, a reverse roll coater, a micro gravure coater, a chamber doctor combination coater, an air knife coater, a dip coater, a bar coater, a comma coater, a die coater, and the like.

The method for drying the undercoat layer (anchor coat layer) is not particularly limited, but examples include a method by natural drying, a method of drying in an oven set to a predetermined temperature, and a method using a dryer attached to a coater, for example, an arch dryer, a floating dryer, a drum dryer, an infrared dryer, or the like. The drying conditions can be appropriately selected depending on the drying method, and for example, in the method of drying in an oven, it may be dried at 60 to 100°C for about 1 second to 2 minutes.

From the viewpoint of easily obtaining sufficient adhesion between layers, the thickness of the undercoat layer (anchor coat layer) may be 0.01 µm or more, 0.03 µm or more, or 0.05 µm or more. From the viewpoint of excellent gas barrier property, the thickness of the undercoat layer (anchor coat layer) may be 5 µm or less, 3 µm or less, or 2 µm or less. From these viewpoints, the thickness of the undercoat layer (anchor coat layer) may be 0.01 to 5 µm, 0.03 to 3 µm, or 0.05 to 2 µm.

### <Multilayer Body>

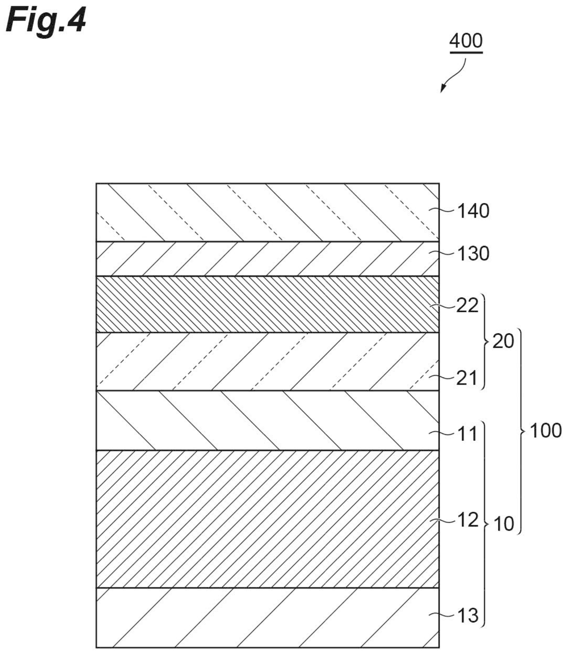

The gas barrier film 100 can be used as a material constituting a multilayer body. Fig. 4 is a cross-sectional view of a multilayer body according to one embodiment of the present disclosure. The multilayer body 400 includes the gas barrier film 100, an adhesive layer 130, and a sealant layer 140. It can also be said that the multilayer body 400 includes the multilayer polyethylene film 10, the inorganic oxide layer 21, the gas barrier coating layer 22, the adhesive layer 130, and the sealant layer 140. That is, another embodiment of the present disclosure is a multilayer body that includes: the above-described gas barrier film; an adhesive layer disposed on a surface of the gas barrier layer opposite the multilayer polyethylene film; and a sealant layer disposed via the adhesive layer.

The content of polyethylene resin in the multilayer body 400 may be 90 mass% or more, or 95 mass% or more, based on the total amount of the multilayer body 400, from the viewpoint of achieving mono-materialization and excellent recyclability.

The thickness of the multilayer body 400 is not particularly limited and can be appropriately determined according to cost and application. The thickness of the multilayer body 400 may be 50 µm or more, 60 µm or more, or 70 µm or more, and may be 300 µm or less, 250 µm or less, or 200 µm or less. From these viewpoints, the thickness of the multilayer body 400 may be 50 to 300 µm, 60 to 250 µm, or 70 to 200 µm.

### (Adhesive Layer)

The adhesive layer 130 is a layer that contains at least one type of adhesive, and is a layer provided between the gas barrier layer 20 and the sealant layer 140 to join them. The adhesive layer 130 can be formed using a known adhesive. The adhesive may be, for example, an adhesive for dry lamination. The adhesive for dry lamination is not particularly limited, and examples include ester-based adhesives, ether-based adhesives, and urethane-based adhesives. These adhesives may be of a one-component curing type or a two-component curing type.

From the viewpoint of excellent gas barrier property, the adhesive layer 130 may be formed using a gas barrier adhesive. In addition, even if minute cracks occur in the inorganic oxide layer 21 or the gas barrier coating layer 22, the gas barrier adhesive can enter and fill the gaps of the cracks to compensate, so a decrease in the gas barrier property of the multilayer body 400 can be suppressed.

The gas barrier adhesive is an adhesive that can exhibit a gas barrier property after curing. Examples of the gas barrier adhesive include epoxy-based adhesives, polyester-polyurethane-based adhesives, and the like. Specific examples of the gas barrier adhesive include "Maxive" manufactured by Mitsubishi Gas Chemical Company, Inc., and "Paslim" manufactured by DIC Corporation.

The oxygen transmission rate of the gas barrier adhesive is, for example, preferably 150 cc/m²·day·atm or less, more preferably 100 cc/m²·day·atm or less, still more preferably 80 cc/m²·day·atm or less, and particularly preferably 50 cc/m²·day·atm or less. When the oxygen transmission rate is within the above range, the gas barrier property of the multilayer body 400 can be sufficiently improved.

The adhesive layer 130 can be formed by forming a coating film by applying an adhesive by, for example, a bar coating method, a dipping method, a roll coating method, a gravure coating method, a reverse coating method, an air knife coating method, a comma coating method, a die coating method, a screen printing method, a spray coating method, a gravure offset method, or the like, and then drying and curing the coating film. From the viewpoint of suppressing cracking of the inorganic oxide layer 21, the adhesive layer 130 is preferably formed directly on the surface of the inorganic oxide layer 21 or the gas barrier coating layer 22. That is, the adhesive layer 130 is preferably formed by directly applying an adhesive onto the surface of the inorganic oxide layer 21 or the gas barrier coating layer 22, and then drying and curing it.

The temperature for drying the coating film may be, for example, 30 to 200°C, and is preferably 50 to 180°C. The temperature for curing the coating film may be, for example, 20 to 70°C, and is preferably 30 to 60°C. By setting the temperatures during drying and curing within the above ranges, the occurrence of cracks in the inorganic oxide layer 21 and the adhesive layer 130 can be suppressed, and the gas barrier property of the multilayer body 400 can be sufficiently improved.

The thickness of the adhesive layer 130 is preferably 0.1 to 20 µm, more preferably 0.5 to 10 µm, and still more preferably 1 to 5 µm. When the thickness of the adhesive layer 130 is 0.1 µm or more, a cushioning property that mitigates impact from the outside can be obtained, which makes it easier to suppress cracking of the inorganic oxide layer 21, and the gas barrier property of the multilayer body 400 can be further improved. When the thickness of the adhesive layer is 20 µm or less, the flexibility of the multilayer body 400 tends to be sufficiently maintained.

The thickness of the adhesive layer 130 is preferably 50 times or more the thickness of the inorganic oxide layer 21. When the thickness of the adhesive layer 130 is 50 times or more the thickness of the inorganic oxide layer 21, a cushioning property that mitigates impact from the outside can be obtained, which makes it easier to suppress cracking of the inorganic oxide layer 21, and the gas barrier property of the multilayer body 400 can be further improved. The thickness of the adhesive layer 130 is preferably 300 times or less the thickness of the inorganic oxide layer 21. When the thickness of the adhesive layer 130 is 300 times or less the thickness of the inorganic oxide layer 21, the flexibility and processing suitability of the multilayer body 400 are excellent, and costs can be reduced. From these viewpoints, the thickness of the adhesive layer 130 may be 50 to 300 times the thickness of the inorganic oxide layer 21.

### (Sealant Layer)

The sealant layer 140 is a layer composed of, for example, a polyethylene resin. The sealant layer 140 is a layer that is joined by heat fusion (heat sealing) when forming a packaging material such as a packaging bag using the multilayer body 400. From the viewpoint of excellent heat sealing property, the polyethylene resin constituting the sealant layer 140 may be a low-density polyethylene resin (LDPE), a linear low-density polyethylene resin (LLDPE), or a very-low-density polyethylene resin (VLDPE). From the viewpoint of environmental load, the sealant layer 140 may be composed of a biomass-derived polyethylene resin or a recycled polyethylene resin. The sealant layer 140 may be composed of, for example, an unstretched polyethylene film.

As the low-density polyethylene, polyethylene having a density of 0.900 g/cm³ or more and less than 0.925 g/cm³ can be used. As the linear low-density polyethylene, polyethylene having a density of 0.900 g/cm³ or more and less than 0.925 g/cm³ can be used. As the very-low-density polyethylene, polyethylene having a density of less than 0.900 g/cm³ can be used.

The sealant layer 140 may include a resin other than polyethylene resin. Examples of the resin other than polyethylene resin include olefin-based resins such as ethylene-vinyl acetate copolymer (EVA), ethylene-α-olefin copolymer, ethylene-(meth)acrylic acid copolymer, homopolypropylene resin (PP), propylene-ethylene random copolymer, propylene-ethylene block copolymer, propylene-α-olefin copolymer, and polybutene. The sealant layer 140 may include additives such as an antioxidant, a lubricant, an antiblocking agent, and an antistatic agent.

The thickness of the sealant layer 140 may be, for example, 20 µm or more, 40 µm or more, or 50 µm or more. When the thickness of the sealant layer 140 is 20 µm or more, sufficient heat seal strength can be achieved. The thickness of the sealant layer 140 may be, for example, 200 µm or less, 170 µm or less, or 150 µm or less. When the thickness of the sealant layer 140 is 200 µm or less, the processing suitability is excellent. From these viewpoints, the thickness of the sealant layer 140 may be 20 to 200 µm, 40 to 170 µm, or 50 to 150 µm.

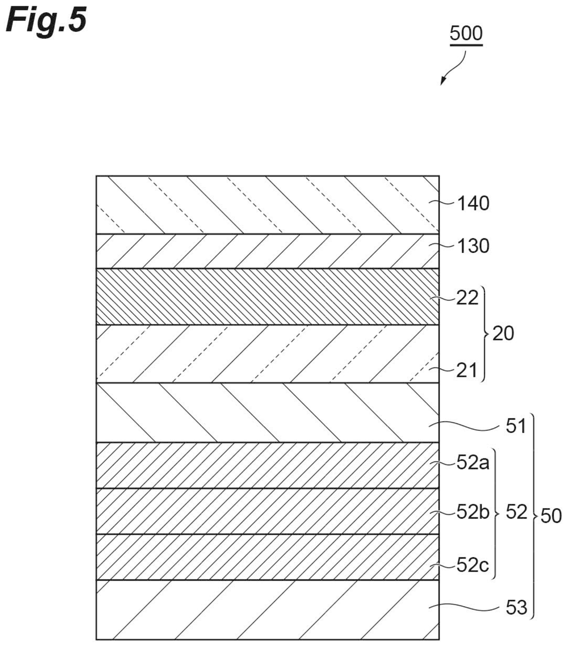

As shown in Fig. 5, when the intermediate layer is formed of a plurality of layers, the multilayer polyethylene film 50 in the multilayer body 500 has a surface layer 51, an intermediate layer 52, and a back layer 53, and the intermediate layer 52 has resin layers 52a, 52b, and 52c. At this time, the resin layers 52a, 52b, and 52c all have the same composition. That the intermediate layer 52 has a plurality of layers can be confirmed by observing a cross section of the multilayer polyethylene film 50 with an optical microscope or an electron microscope.

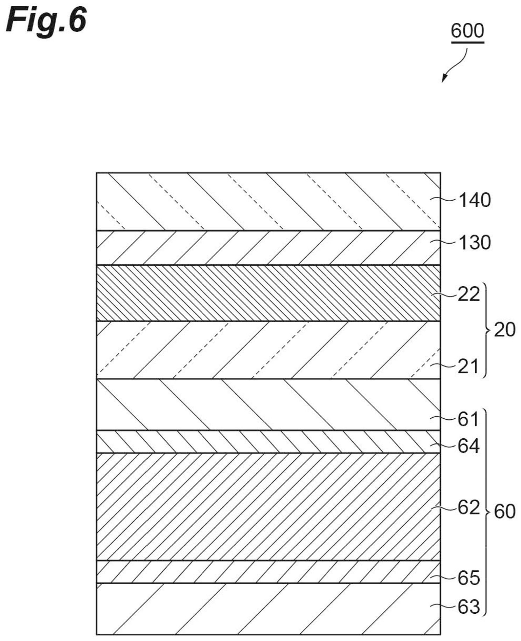

As shown in Fig. 6, when the multilayer polyethylene film includes layers other than the three layers of the surface layer, the intermediate layer, and the back layer, the multilayer polyethylene film 60 in the multilayer body 600 has a surface layer 61, an intermediate layer 62, and a back layer 63, and has a resin layer 64 between the surface layer 61 and the intermediate layer 62, and a resin layer 65 between the intermediate layer 62 and the back layer 63. The resin layer 64 is, for example, a layer that contains a polyethylene resin and has a different composition from the surface layer 61 and the intermediate layer 62. The resin layer 65 is, for example, a layer that contains a polyethylene resin and has a different composition from the intermediate layer 62 and the back layer 63. The multilayer polyethylene film may be, for example, 3 layers, 5 layers, 7 layers, or more.

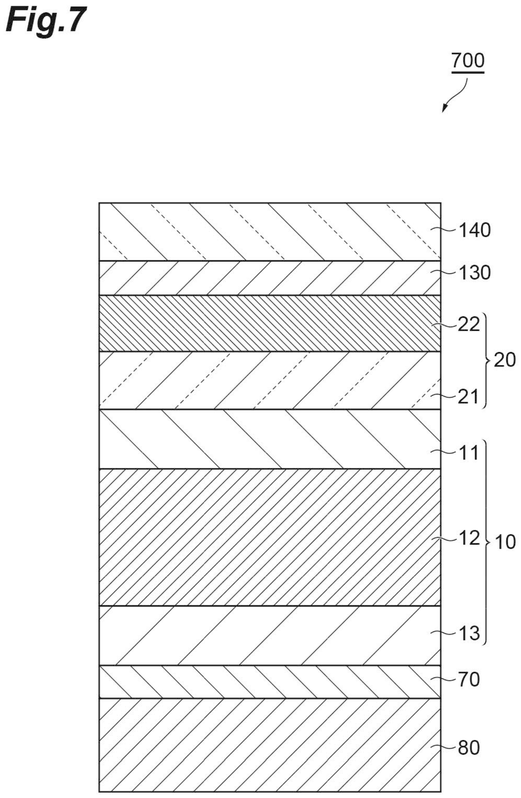

As shown in Fig. 7, the multilayer body 700 may include a second adhesive layer 170 on the surface of the multilayer polyethylene film 10 opposite the sealant layer 140 side, and a base material 180 disposed via the second adhesive layer 170.

### (Second Adhesive Layer)

The second adhesive layer 170 is a layer that contains at least one type of adhesive, and is provided between the multilayer polyethylene film 10 and the base material 180 to join them. The adhesive used for the second adhesive layer 170 may be a one-component curing adhesive or a two-component curing adhesive. Examples of the adhesive include urethane-based adhesives, epoxy-based adhesives, silicone-based adhesives, and the like. The second adhesive layer may use the adhesive used to form the above-described adhesive layer 130.

The thickness of the second adhesive layer 170 may be, for example, 0.5 µm or more, 0.8 µm or more, or 1 µm or more, and may be 6 µm or less, 5 µm or less, or 4.5 µm or less. From these viewpoints, the thickness of the second adhesive layer 170 may be 0.5 to 6 µm, 0.8 to 5 µm, or 1 to 4.5 µm.

### (Base Material)

The base material 180 is the outermost layer of the multilayer body 700 and is a layer provided for the purpose of protecting the multilayer body 700. The base material 180 may be, for example, a layer containing a polyethylene resin, and may be a polyethylene film. In addition to polyethylene resin, the base material 180 may include additives such as an antioxidant, a lubricant, an antiblocking agent, and an antistatic agent.

The difference in heat fusion temperature between the base material 180 and the sealant layer 140 may be 10°C or more. When the difference in heat fusion temperature between the base material 180 and the sealant layer 140 is 10°C or more, it becomes easier to form a packaging bag when producing the packaging bag using the multilayer body 700 as a packaging material.

The thickness of the base material 180 may be, for example, 10 µm or more, 20 µm or more, or 30 µm or more, and may be 200 µm or less, 150 µm or less, or 100 µm or less. From these viewpoints, the thickness of the base material 180 may be 10 to 200 µm, 20 to 150 µm, or 30 to 100 µm.

The multilayer body 400 may further include a printed layer (not shown). The printed layer is provided at a position visible from the outside of the multilayer body 400 for the purpose of displaying information about the packaged goods, identifying the packaged goods, or improving the design of the packaging bag. The printed layer may be provided, for example, on the surface of the inorganic oxide layer 21, on the surface of the gas barrier coating layer 22, or on the surface of the sealant layer 140 of the multilayer body 400.

The method for forming the printed layer is not particularly limited, and known printing methods and printing inks can be applied. The printing method and printing ink are appropriately selected, for example, in consideration of printing suitability for each layer of the multilayer body 400, design properties such as color tone, adhesion, safety as a food container, and the like.

Examples of the printing method include a gravure printing method, an offset printing method, a gravure offset printing method, a flexo printing method, and an inkjet printing method. Among these, the gravure printing method is preferable from the viewpoints of productivity and high definition of patterns.

From the viewpoint of enhancing the adhesion of the printed layer, the surface of the layer on which the printed layer is to be formed may be subjected to a pretreatment such as a corona treatment, a plasma treatment, or a flame treatment, or a coat layer such as an easy-adhesion layer may be provided.

### <Packaging Material>

The gas barrier films 100, 200, 300 and the multilayer bodies 400, 500, 600, 700 can be used as packaging materials constituting packaging bags. Specifically, after providing a sealant layer on the gas barrier films 100, 200, 300 to form a multilayer body, it can be used as a packaging material such as a flat bag, a three-side seal bag, a fin-seal bag, a gusset bag, a standing pouch, a pouch with a spout, a pouch with a beak, and the like.

In addition to packaging materials, the gas barrier films 100, 200, 300 and the multilayer bodies 400, 500, 600, 700 can be used as films for electronic devices, films for solar cells, films for fuel cells, substrate films, and the like.

### Examples

Hereinafter, the present disclosure will be specifically described by way of examples. However, the present disclosure is not limited to the following examples.

### <Polyethylene Resin>

- Resin A: density 0.963 g/cm³, MFR 1.35 g/10 min, DSC melting point 134°C.
- Resin B: density 0.944 g/cm³, MFR 0.45 g/10 min, DSC melting point 131°C.
- Resin C: density 0.950 g/cm³, MFR 1.1 g/10 min, DSC melting point 130°C.
- Resin D: density 0.958 g/cm³, MFR 1 g/10 min, DSC melting point 133°C.
- Resin E: density 0.960 g/cm³, MFR 1 g/10 min, DSC melting point 135°C.
- Resin F: density 0.920 g/cm³, MFR 0.85 g/10 min, DSC melting point 124°C.
- Resin G: density 0.941 g/cm³, MFR 1.3 g/10 min, DSC melting point 129°C.
- Resin H: density 0.962 g/cm³, MFR 0.85 g/10 min, DSC melting point 134°C.
- Resin I: density 0.926 g/cm³, MFR 0.85 g/10 min, DSC melting point 123°C.

### <Production of Polyethylene Film>

### (Examples 1 to 26A, Comparative Examples 1 to 11A)

Resins shown in Tables 1 to 6 for constituting the surface layer, intermediate layer, and back layer were respectively fed into an extruder, melt-kneaded at 190°C, and then the polyethylene resin was introduced from a three-layer die to produce a multilayer polyethylene film by an air-cooled inflation method. The total thickness of the multilayer polyethylene films produced in each Example and each Comparative Example was in the range of 25 to 40 µm. The content of polyethylene resin in the multilayer polyethylene films produced in each Example and each Comparative Example was 90 mass% or more in all cases.

### <Production of Gas Barrier Film>

An undercoat layer, an inorganic oxide layer, and a gas barrier coating layer were formed on the surface layer side of the multilayer polyethylene film produced in each Example and each Comparative Example to have the configurations shown in Tables 1 to 6, thereby producing a gas barrier film laminated in the order of multilayer polyethylene film/undercoat layer/inorganic oxide layer/gas barrier coating layer. The undercoat layer, adhesive layer, inorganic oxide layer, and gas barrier coating layer were each formed by the methods described later. The content of polyethylene resin in the gas barrier films produced in each Example and each Comparative Example was 90 mass% or more in all cases.

### <Undercoat Layer>

Acrylic polyol (ACRYDIC CL-1000, manufactured by DIC Corporation) and an isocyanate-based compound (TDI type curing agent Coronate 2030, manufactured by Tosoh Corporation) were mixed so that the solid content mass ratio was 6:4. Next, ethyl acetate was added to dilute the mixture so that the solid content became 2 mass%, to obtain a coating liquid for forming an undercoat layer. After subjecting one side of the surface layer side of the multilayer polyethylene film of each Example and each Comparative Example to a corona treatment, the coating liquid for forming an undercoat layer was applied to the corona-treated surface using a gravure printing machine to form a coating film, which was then dried in an oven at 60°C for 10 seconds to form an undercoat layer with a thickness of 0.1 µm.

### <Inorganic Oxide Layer>

When the inorganic oxide was silicon oxide, a transparent inorganic oxide layer (silicon oxide film) made of silicon oxide with a thickness of 30 nm was formed by a vacuum deposition apparatus using an electron beam heating method. The silicon oxide film had an O/Si ratio of 1.8.

When the inorganic oxide was aluminum oxide, a transparent inorganic oxide layer (aluminum oxide film) made of aluminum oxide with a thickness of 15 nm was formed by a vacuum deposition apparatus using an electron beam heating method. The aluminum oxide film had an O/Al ratio of 1.5.

### <Gas Barrier Coating Layer>

### (Organic-Inorganic Composite Coating Film)

An aqueous solution in which polyvinyl alcohol resin (PVA, Poval PVA-105 manufactured by Kuraray Co., Ltd., degree of saponification 98-99%, degree of polymerization 500) was dissolved, tetraethoxysilane (TEOS), and γ-glycidoxypropyltrimethoxysilane (GPTMS, KBM-403 manufactured by Shin-Etsu Chemical Co., Ltd.) were each prepared as an aqueous solution hydrolyzed with 0.02 mol/L hydrochloric acid. Next, the three aqueous solutions were mixed so that the mass ratio before hydrolysis of PVA, TEOS, and GPTMS was PVA:TEOS:GPTMS = 40:50:10. Next, isopropyl alcohol was added to the mixed aqueous solution to dilute it so that the mass ratio of water to isopropyl alcohol was 90:10, to obtain a coating liquid for forming an organic-inorganic composite coating film (solid content: 5 mass%). On the inorganic oxide layer, the mixed liquid for an organic-inorganic composite coating film described below was applied using a gravure printing machine to form a coating film, which was then dried in an oven at 60°C for 10 seconds to form a gas barrier coating layer made of an organic-inorganic composite coating film with a thickness of 0.3 µm.

### (Polyvalent Metal Salt of Polycarboxylic Acid Coating Film)

To 20 parts by mass of an aqueous polyacrylic acid solution (Aron A-10H, manufactured by Toagosei Co., Ltd., number-average molecular weight 200,000, solid content concentration 25 mass%), 58.9 parts by mass of distilled water was added for dilution. Next, 0.44 parts by mass of aminopropyltrimethoxysilane (APTMS, manufactured by Aldrich) was added and stirred to obtain a uniform mixed liquid for A-coating film mainly composed of a polycarboxylic acid-based polymer. 100 parts by mass of an aqueous dispersion of zinc oxide fine particles (ZE143, manufactured by Sumitomo Osaka Cement Co., Ltd.) and 2 parts by mass of a curing agent (Liofol HAERTER UR 5889-21, manufactured by Henkel) were mixed to obtain a mixed liquid for B-coating film mainly composed of a polyvalent metal compound. On the inorganic oxide layer, the mixed liquid for A-coating film described below was applied using a gravure printing machine to form a coating film, which was then dried in an oven at 60°C for 10 seconds to form an A-coating film with a thickness of 0.2 µm. Furthermore, the mixed liquid for B-coating film was applied using a gravure printing machine to form a coating film, which was then dried in an oven at 60°C for 10 seconds to form a B-coating film with a thickness of 0.2 µm. Thereby, an oxygen barrier coating film made of a polyvalent metal salt of polycarboxylic acid coating film was formed.

### <Adhesive Layer>

### (Urethane-based Adhesive)

To 100 parts by mass of TAKELAC A525 (manufactured by Mitsui Chemicals, Inc.), 11 parts by mass of TAKENATE A52 (manufactured by Mitsui Chemicals, Inc.) and 84 parts by mass of ethyl acetate were mixed to obtain a urethane-based adhesive.

### (Epoxy-based Adhesive)

To 23 parts by mass of a solvent in which ethyl acetate and methanol were mixed at a mass ratio of 1:1, 16 parts by mass of Maxive C93T (manufactured by Mitsubishi Gas Chemical Company, Inc.) and 5 parts by mass of Maxive M-100 (manufactured by Mitsubishi Gas Chemical Company, Inc.) were mixed to obtain an epoxy-based adhesive.

### <Complex Modulus>

The multilayer polyethylene film was embedded in a visible light-curable resin D-800. Next, the multilayer polyethylene film was cut perpendicular to the lamination direction with a diamond knife Microstar LH using an ultramicrotome Leica EM UC7. The exposed cross-section was subjected to a finishing treatment under the conditions of a cutting thickness Feed of 100 nm and a cutting speed Speed of 1 mm/s to prepare a measurement sample.

For the measurement, a Hysitron TI-Premier (trade name) manufactured by Bruker Japan K.K. was used as a measurement apparatus, and a Berkovich diamond indenter manufactured by Bruker Japan K.K. was used as an indenter. The measurement conditions were as follows.

Temperature: Room temperature (25°C).

Mode: Load control mode.

Indentation and unloading: Indentation was performed up to a load of 15 µN at an indentation speed of 1.5 µN/sec, then held at the maximum load for 5 seconds, followed by unloading at a speed of 1.5 µN/sec.

Measurement points: A shape image of the measurement sample cross-section was obtained by the shape measurement function of the measurement apparatus that scans the sample surface with the indenter, and 20 points were specified on the cross-section of the measurement sample from the shape image at intervals of 1 µm or more.

For the calculation of the complex modulus, the relationship between the contact depth of the indenter and the sample and the contact projected area was calibrated in advance using fused silica as a standard sample. Thereafter, the unloading curve in the 60 to 95% region of the maximum load during unloading was analyzed by the Oliver-Pharr method to calculate the complex modulus of the measurement sample. The measurement results are shown in Tables 1 to 6.

### <Melting Peak Temperature>

For the produced multilayer polyethylene film, differential scanning calorimetry was performed using a differential scanning calorimeter (trade name DSC7020, manufactured by Hitachi, Ltd.) in accordance with JIS K7121-1987 under the conditions of a measurement temperature of 20 to 200°C and a heating rate of 10°C/min, and the temperature of the maximum value of the melting peak of the obtained curve was read. The results are shown in Tables 1 to 6. When the maximum value of the melting peak does not exist in the range of more than 129°C and less than 136°C, it is indicated as "-" in the table.

### [Evaluation]

### <Processing Stability>

The appearance of the gas barrier film after forming the gas barrier coating layer (or after forming the inorganic oxide layer for Examples and Comparative Examples where no gas barrier coating layer was formed) was visually confirmed, and the processing stability was evaluated based on the following evaluation criteria. The evaluation results are shown in Tables 1 to 6.
A: No wrinkles were observed in the appearance of the gas barrier film.
B: Slight wrinkles were observed in the appearance of the gas barrier film.
C: Many wrinkles were observed in the appearance of the gas barrier film.

### <Transparency>

The haze of the produced multilayer polyethylene film was measured using a haze meter (NDH-20, manufactured by Nippon Denshoku Industries Co., Ltd.) in accordance with JIS K7136, and the transparency was evaluated based on the following evaluation criteria. The evaluation results are shown in Tables 1 to 6.
A: Haze is less than 20%
B: Haze is 20% or more and less than 35%
C: Haze is 35% or more

### <Oxygen Barrier Property>

For the gas barrier film produced in each Example and each Comparative Example, the above-mentioned urethane-based adhesive or the above-mentioned gas barrier adhesive was dry-laminated using a multicoater TM-MC (manufactured by HIRANO TECSEED Co., Ltd.), and then cured at 40°C for 3 days to form an adhesive layer. After curing, LLDPE (polyethylene film, TUX MC-S manufactured by Mitsui Chemicals Tohcello, Inc., thickness 60 µm) was laminated to the adhesive layer to produce a multilayer body in which a gas barrier film/adhesive/LLDPE were laminated in this order. Using an oxygen transmission rate measurement apparatus (trade name OXTRAN-2/20, manufactured by MOCON, Inc.), the oxygen transmission rate (cm³/(m²·day·atm)) of the produced multilayer body was measured in an atmosphere of 30°C and 70% RH in accordance with JIS K-7126-2 B method, and the oxygen barrier property was evaluated based on the following evaluation criteria. The evaluation results are shown in Tables 1 to 6.
A+: Oxygen transmission rate is less than 2 cm³/(m²·day·atm).
A: Oxygen transmission rate is 2 cm³/(m²·day·atm) or more and less than 5 cm³/(m²·day·atm).
A-: Oxygen transmission rate is 5 cm³/(m²·day·atm) or more and less than 10 cm³/(m²·day·atm).
B+: Oxygen transmission rate is 10 cm³/(m²·day·atm) or more and less than 20 cm³/(m²·day·atm).
B: Oxygen transmission rate is 20 cm³/(m²·day·atm) or more and less than 50 cm³/(m²·day·atm).
B-: Oxygen transmission rate is 50 cm³/(m²·day·atm) or more.

### <Oxygen Barrier Property after Boiling Treatment>

The produced multilayer body was cut into two pieces of 15 cm × 10 cm size, and the two cut pieces of the multilayer body were stacked so that their sealant layers faced each other, and three sides were impulse-sealed in a pouch shape. 150 mL of water was put into the pouch as packaged goods, and the remaining one side was impulse-sealed to produce a pouch (packaging bag) sealed on four sides. The produced pouch was subjected to a boiling treatment at 95°C for 30 minutes in a boiling treatment apparatus. After the boiling treatment, the pouch was opened, the packaged goods were removed, and after sufficient drying, the oxygen transmission rate was measured by the above-described method to evaluate the oxygen barrier property. The evaluation results are shown in Tables 1 to 6.

**[Table 1]**

| | | Example 1A | Example 2A | Example 3A | Example 4A | Example 5A | Example 6A |
|---|---|---|---|---|---|---|---|
| Resin | Surface layer | C | C | c | C | C | C |
| | Intermediate layer | D | D | D | D | D | D |
| | Back layer | C | C | C | C | C | C |
| Density (g/cm³) | Surface layer | 0.950 | 0.950 | 0.950 | 0.950 | 0.950 | 0.950 |
| | Intermediate layer | 0.958 | 0.958 | 0.958 | 0.958 | 0.958 | 0.958 |
| | Back layer | 0.950 | 0.950 | 0.950 | 0.950 | 0.950 | 0.950 |
| Density of multilayer polyethylene film (g/cm³) | | 0.955 | 0.953 | 0.954 | 0.956 | 0.955 | 0.955 |
| Thickness ratio | Surface layer | 1 | 1 | 1 | 1 | 1 | 1 |
| | Intermediate layer | 3 | 1 | 2 | 6 | 3 | 3 |
| | Back layer | | 1 | 1 | 1 | 1 | 1 |
| Ratio of intermediate layer thickness to total thickness of surface and back layers | | 1.5 | 0.5 | 1 | 3 | 1.5 | 1.5 |
| Complex modulus (GPa) | Surface layer | 1.80 | 1.80 | 1.80 | 1.80 | 1.80 | 1.80 |
| | Intermediate layer | 2.09 | 2.09 | 2.09 | 2.09 | 2.09 | 2.09 |
| | Back layer | 1.80 | 1.80 | 1.80 | 1.80 | 1.80 | 1.80 |
| DSC melting peak temperature (°C) | | 130, 133 | 130, 133 | 130, 133 | 130, 133 | 130, 133 | 130, 133 |
| Gas barrier layer | Inorganic oxide layer | Silicon oxide | Silicon oxide | Silicon oxide | Silicon oxide | Silicon oxide | Aluminum oxide |
| | Gas barrier coating layer | Organic-inorganic composite film | Organic-inorganic composite film | Organic-inorganic composite film | Organic-inorganic composite film | Organic-inorganic composite film | Organic-inorganic composite film |
| Adhesive layer | | Urethane-based | Urethane-based | Urethane-based | Urethane-based | Urethane-based | Urethane-based |
| Evaluation | Processing stability | A | A | A | A | A | A |
| | Transparency | A | A | A | A | A | A |
| | Oxygen barrier property | A+ | A+ | A+ | A+ | A+ | A |
| | Oxygen barrier property after boiling treatment | A | A- | A | A | A | A- |

**[Table 2]**

| | | Example 7A | Example 8A | Example 9A | Example 10A | Example 11A | Example 12A |
|---|---|---|---|---|---|---|---|
| Resin | Surface layer | C | C | C | C | C | C |
| | Intermediate layer | D | D | D | D | D | D |
| | Back layer | C | C | C | C | C | C |
| Density (g/cm³) | Surface layer | 0.950 | 0.950 | 0.950 | 0.950 | 0.950 | 0.950 |
| | Intermediate layer | 0.958 | 0.958 | 0.958 | 0.958 | 0.958 | 0.958 |
| | Back layer | 0.950 | 0.950 | 0.950 | 0.950 | 0.950 | 0.950 |
| Density of multilayer polyethylene film (g/cm³) | | 0.955 | 0.955 | 0.955 | 0.955 | 0.955 | 0.955 |
| Thickness ratio | Surface layer | 1 | 1 | 1 | 1 | 1 | 1 |
| | Intermediate layer | 3 | 3 | 3 | 3 | 3 | 3 |
| | Back layer | 1 | 1 | 1 | 1 | 1 | 1 |
| Ratio of intermediate layer thickness to total thickness of surface and back layers | | 1.5 | 1.5 | 1.5 | 1.5 | 1.5 | 1.5 |
| Complex modulus (GPa) | Surface layer | 1.80 | 1.80 | 1.80 | 1.80 | 1.80 | 1.80 |
| | Intermediate layer | 2.09 | 2.09 | 2.09 | 2.09 | 2.09 | 2.09 |
| | Back layer | 1.80 | 1.80 | 1.80 | 1.80 | 1.80 | 1.80 |
| DSC melting peak temperature (°C) | | 130, 133 | 130, 133 | 130, 133 | 130, 133 | 130, 133 | 130, 133 |
| Gas barrier layer | Inorganic oxide layer | Aluminum oxide | None | None | Silicon oxide | Silicon oxide | Aluminum oxide |
| | Gas barrier coating layer | Polyvalent metal salt of carboxylic acid film | Organic-inorganic composite film | Polyvalent metal salt of carboxylic acid film | Organic-inorganic composite film | None | None |
| Adhesive layer | | Urethane-based | Urethane-based | Urethane-based | Epoxy-based | Epoxy-based | Epoxy-based |
| Evaluation | Processing stability | A | A | A | A | A | A |
| | Transparency | A | A | A | A | A | A |
| | Oxygen barrier property | A+ | A- | A- | A+ | A+ | A |
| | Oxygen barrier property after boiling treatment | A+ | A- | A+ | A+ | A+ | A- |

**[Table 3]**

| | | Example 13A | Example 14A | Example 15A | Example 16A | Example 17A | Example 18A | Example 19A |
|---|---|---|---|---|---|---|---|---|
| Resin | Surface layer | C | C | C | C | C | C | C |
| | Intermediate layer | A | A | A | A | A | A | A |
| | Back layer | C | C | C | C | C+A (90:10) | C+A (90:10) | C+A (90:10) |
| Density (g/cm³) | Surface layer | 0.950 | 0.950 | 0.950 | 0.950 | 0.950 | 0.950 | 0.950 |
| | Intermediate layer | 0.963 | 0.963 | 0.963 | 0.963 | 0.963 | 0.963 | 0.963 |
| | Back layer | 0.950 | 0.950 | 0.950 | 0.950 | 0.957 | 0.957 | 0.957 |
| Density of multilayer polyethylene film (g/cm³) | | 0.958 | 0.954 | 0.958 | 0.958 | 0.959 | 0.959 | 0.959 |
| Thickness ratio | Surface layer | 1 | 1 | 1 | 1 | 1 | 1 | 1 |
| | Intermediate layer | 3 | 1 | 3 | 3 | 4 | 4 | 4 |
| | Back layer | 1 | 1 | 1 | 1 | 1 | 1 | 1 |
| Ratio of intermediate layer thickness to total | | 1.5 | 0.5 | 1.5 | 1.5 | 2 | 2 | 2 |
| Complex modulus (GPa) | Surface layer | 1.80 | 1.80 | 1.80 | 1.80 | 1.80 | 1.80 | 1.80 |
| | Intermediate layer | 2.27 | 2.27 | 2.27 | 2.27 | 2.27 | 2.27 | 2.27 |
| | Back layer | 1.80 | 1.80 | 1.80 | 1.80 | 1.85 | 1.85 | 1.85 |
| DSC melting peak temperature (°C) | | 130, 133 | 130, 133 | 130, 133 | 130, 133 | 132 | 132 | 132 |
| Gas barrier layer | Inorganic oxide layer | Silicon oxide | Silicon oxide | Aluminum oxide | Silicon oxide | Silicon oxide | Aluminum oxide | None |
| | Gas barrier coating layer | Organic-inorganic composite film | Organic-inorganic composite film | Polyvalent metal salt of carboxylic acid film | None | Organic-inorganic composite film | Organic-inorganic composite film | Polyvalent metal salt of carboxylic acid film |
| Adhesive layer | | Urethane-based | Urethane-based | Urethane-based | Epoxy-based | Urethane-based | Urethane-based | Urethane-based |
| Evaluation | Processing stability | A | A | A | A | A | A | A |
| | Transparency | A | A | A | A | A | A | A |
| | Oxygen barrier property | A+ | A+ | A+ | A+ | A+ | A+ | A- |
| | Oxygen barrier property after boiling treatment | A | A- | A+ | A+ | A | A+ | A+ |

**[Table 4]**

| | | Example 20A | Example 21A | Example 22A | Example 23A | Example 24A | Example 25A | Example 26A |
|---|---|---|---|---|---|---|---|---|
| Resin | Surface layer | C | C | C | B | G | 1 | G+H (80:20) |
| | Intermediate layer | E | E | E | A | H | C | H |
| | Back layer | C+E (95:5) | C+E (95:5) | C+E (95:5) | B | G | 1 | G+H (80:20) |
| Density (g/cm³) | Surface layer | 0.950 | 0.950 | 0.950 | 0.944 | 0.941 | 0.926 | 0.945 |
| | Intermediate layer | 0.960 | 0.960 | 0.960 | 0.963 | 0.962 | 0.950 | 0.962 |
| | Back layer | 0.953 | 0.953 | 0.953 | 0.944 | 0.941 | 0.926 | 0.958 |
| Density of multilayer polyethylene film (g/cm³) | | 0.9561 | 0.9561 | 0.9561 | 0.9554 | 0.9536 | 0.9404 | 0.9578 |
| Thickness ratio | Surface layer | 1 | 1 | 1 | 1 | 1 | 1 | 1 |
| | Intermediate layer | 3 | 3 | 3 | 3 | 3 | 3 | 3 |
| | Back layer | 1 | 1 | 1 | 1 | 1 | 1 | 1 |
| Ratio of intermediate layer thickness to total thickness of surface and back lavers | | 1.5 | 1.5 | 1.5 | 1.5 | 1.5 | 1.5 | 1.5 |
| Complex modulus (GPa) | Surface layer | 1.80 | 1.80 | 1.80 | 1.73 | 1.52 | 1.45 | 1.62 |
| | Intermediate layer | 2.38 | 2.38 | 2.38 | 2.27 | 2.14 | 1.80 | 2.14 |
| | Back layer | 1.83 | 1.83 | 1.83 | 1.73 | 1.52 | 1.45 | 1.62 |
| DSC melting peak temperature (°C) | | 130, 135 | 130, 135 | 130, 135 | 132 | 133 | 130 | 133 |
| Gas barrier layer | Inorganic oxide layer | Silicon oxide | Silicon oxide | Silicon oxide | Silicon oxide | Silicon oxide | Silicon oxide | Silicon oxide |
| | Gas barrier coating layer | Organic-inorganic composite film | None | None | Organic-inorganic **composite film** | Organic-inorganic composite film | Organic-inorganic **composite film** | Organic-inorganic composite film |
| Adhesive layer | | Urethane-based | Urethane-based | Epoxy-based | Urethane-based | Urethane-based | Urethane-based | Urethane-based |
| Evaluation | Processing stability | A | A | A | A | A | A | A |
| | Transparency | A | A | A | A | A | A | B |
| | Oxygen barrier property | A | A | A+ | A+ | A+ | A | A+ |
| | Oxygen barrier property after boiling treatment | A- | A- | A | A | A | A- | A |

**[Table 5]**

| | | Comparative Example 1A | Comparative Example 2A | Comparative Example 3A | Comparative Example 4A | Comparative Example 5A | Comparative Example 6A |
|---|---|---|---|---|---|---|---|
| Resin | Surface layer | A | A | A | A | A | A |
| | Intermediate layer | A | A | A | A | C | C |
| | Back layer | A | A | A | A | A | A |
| Density (g/cm³) | Surface layer | 0.963 | 0.963 | 0.963 | 0.963 | 0.963 | 0.963 |
| | Intermediate layer | 0.963 | 0.963 | 0.963 | 0.963 | 0.950 | 0.950 |
| | Back layer | 0.963 | 0.963 | 0.963 | 0.963 | 0.963 | 0.963 |
| Density of multilayer polyethylene film (g/cm³) | | 0.963 | 0.963 | 0.963 | 0.963 | 0.955 | 0.960 |
| Thickness ratio | Surface layer | 1 | 1 | 1 | 1 | 1 | 2 |
| | Intermediate layer | 3 | 3 | 3 | 3 | 3 | 1 |
| | Back layer | 1 | 1 | 1 | 1 | 1 | 2 |
| Ratio of intermediate layer thickness to total thickness of surface and back layers | | 1.5 | 1.5 | 1.5 | 1.5 | 1.5 | 0.25 |
| Complex modulus (GPa) | Surface layer | 2.27 | 2.27 | 2.27 | 2.27 | 2.27 | 2.27 |
| | Intermediate layer | 2.27 | 2.27 | 2.27 | 2.27 | 1.80 | 1.80 |
| | Back layer | 2.27 | 2.27 | 2.27 | 2.27 | 2.27 | 2.27 |
| DSC melting peak temperature (°C) | | 133 | 133 | 133 | 133 | 130, 133 | 133 |
| Gas barrier layer | Inorganic oxide layer | Silicon oxide | Silicon oxide | Silicon oxide | Aluminum oxide | Silicon oxide | Silicon oxide |
| | Gas barrier coating layer | Organic-inorganic composite film | None | None | Polyvalent metal salt of carboxylic acid film | Organic-inorganic composite film | Organic-inorganic composite film |
| Adhesive layer | | Urethane-based | Urethane-based | Epoxy-based | Urethane-based | Urethane-based | Urethane-based |
| Evaluation | Processing stability | A | A | A | A | C | B |
| | Transparency | C | C | c | C | C | C |
| | Oxygen barrier property | A- | B+ | A- | A- | B+ | A- |
| | Oxygen barrier property after boiling treatment | B+ | B- | B+ | A- | B | B+ |

**[Table 6]**

| | | Comparative Example 7A | Comparative Example 8A | Comparative Example 9A | Comparative Example 10A | Comparative Example 11A |
|---|---|---|---|---|---|---|
| Resin | Surface layer | E | G | G | F | F |
| | Intermediate layer | E | G | G | H | F |
| | Back layer | C | G | G | F | F |
| Density (g/cm³) | Surface layer | 0.960 | 0.941 | 0.941 | 0.920 | 0.920 |
| | Intermediate layer | 0.960 | 0.941 | 0.941 | 0.962 | 0.920 |
| | Back layer | 0.950 | 0.941 | 0.941 | 0.920 | 0.920 |
| Density of multilayer polyethylene film (g/cm³) | | 0.958 | 0.941 | 0.941 | 0.945 | 0.920 |
| Thickness ratio | Surface layer | 1 | 1 | 1 | 1 | 1 |
| | Intermediate layer | 3 | 3 | 3 | 3 | 3 |
| | Back layer | 1 | 1 | 1 | 1 | 1 |
| Ratio of intermediate layer thickness to total thickness of surface and back lavers | | 1.5 | 1.5 | 1.5 | 1.5 | 1.5 |
| Complex modulus (GPa) | Surface layer | 2.38 | 1.52 | 1.52 | 0.71 | 0.71 |
| | Intermediate layer | 2.38 | 1.52 | 1.52 | 2.14 | 0.71 |
| | Back layer | 1.80 | 1.52 | 1.52 | 0.71 | 0.71 |
| DSC melting peak temperature (°C) | | 130 | - | - | 134 | - |
| Gas barrier layer | Inorganic oxide layer | Silicon oxide | Silicon oxide | Aluminum oxide | Silicon oxide | Silicon oxide |
| | Gas barrier coating layer | Organic-inorganic composite film | Organic-inorganic composite film | Polyvalent metal salt of carboxylic acid film | Organic-inorganic composite film | Organic-inorganic composite film |
| Adhesive layer | | Urethane-based | Urethane-based | Urethane-based | Urethane-based | Urethane-based |
| Evaluation | Processing stability | A | c | c | B | c |
| | Transparency | B | A | A | A | A |
| | Oxygen barrier property | A- | A- | A- | A- | A- |
| | Oxygen barrier property after boiling treatment | B+ | B | B+ | B | B |

### <Production of Polyethylene Film>

### (Examples 1 to 13B, 16 to 22B, Comparative Examples 1 to 10B)

Resins shown in Tables 7, 8, and 10 to 12 for constituting the surface layer, intermediate layer, and back layer were respectively fed into an extruder, melt-kneaded at 190°C, and then the polyethylene resin was introduced from a three-layer die to produce a multilayer polyethylene film by an air-cooled inflation method. The total thickness of the multilayer polyethylene films produced in each Example and each Comparative Example was in the range of 25 to 40 µm. The content of polyethylene resin in the multilayer polyethylene films produced in each Example and each Comparative Example was 90 mass% or more in all cases.

### (Example 14B)

Resins shown in Table 9 for constituting layers 1 to 5 were respectively fed into an extruder, melt-kneaded at 190°C, and then the polyethylene resin was introduced from a five-layer die to produce a multilayer polyethylene film by an air-cooled inflation method, in which layer 1 was the surface layer, layers 2 to 4 were the intermediate layer, and layer 5 was the back layer. The content of polyethylene resin in the produced multilayer polyethylene film was 90 mass% or more.

### (Example 15B)

Resins shown in Table 9 for constituting layers 1 to 7 were respectively fed into an extruder, melt-kneaded at 190°C, and then the polyethylene resin was introduced from a seven-layer die to produce a multilayer polyethylene film by an air-cooled inflation method, in which layer 1 was the surface layer, layers 2 to 6 were the intermediate layer, and layer 7 was the back layer. The content of polyethylene resin in the produced multilayer polyethylene film was 90 mass% or more.

### <Production of Multilayer Body>

The surface on the surface layer side of the multilayer polyethylene film produced in each Example and each Comparative Example was subjected to a corona treatment. Next, by the methods described later, an anchor coat layer, an inorganic oxide layer, a gas barrier coating layer, an adhesive layer, and a sealant layer were formed on the surface of the multilayer polyethylene film to have the configurations shown in Tables 7 to 12, and after laminating in the order of multilayer polyethylene film/anchor coat layer/inorganic oxide layer/gas barrier coating layer/adhesive layer/sealant layer, the laminate was aged at 40°C for 4 days to obtain a multilayer body. The content of polyethylene resin in the multilayer bodies produced in each Example and each Comparative Example was 90 mass% or more.

The surface on the back layer side of the multilayer polyethylene film produced in Examples 19 to 22B was subjected to a corona treatment. Next, by the methods described later, an anchor coat layer, an inorganic oxide layer, a gas barrier coating layer, an adhesive layer, and a sealant layer were formed on the surface of the multilayer polyethylene film to have the configuration shown in Table 10. Next, either the urethane-based adhesive or the epoxy-based adhesive described below was applied by a dry lamination method, or a non-solvent adhesive was applied by a laminator for solventless adhesives, to the surface of the multilayer polyethylene film opposite the sealant layer to form a second adhesive layer. Next, an unstretched polyethylene (thickness 30 µm) or a stretched polyethylene (thickness 25 µm) was laminated as a base material to the second adhesive layer, and aged at 40°C for 1 day to obtain a multilayer body. The content of polyethylene resin in the multilayer bodies produced in each Example and each Comparative Example was 90 mass% or more. Urethane-based adhesive: To 100 parts by mass of TAKELAC A525 (manufactured by Mitsui Chemicals, Inc.), 11 parts by mass of TAKENATE A52 (manufactured by Mitsui Chemicals, Inc.) and 84 parts by mass of ethyl acetate were mixed to obtain a urethane-based adhesive.

Epoxy-based adhesive: To 23 parts by mass of a solvent in which ethyl acetate and methanol were mixed at a mass ratio of 1:1, 16 parts by mass of Maxive C93T (manufactured by Mitsubishi Gas Chemical Company, Inc.) and 5 parts by mass of Maxive M-100 (manufactured by Mitsubishi Gas Chemical Company, Inc.) were mixed to obtain an epoxy-based adhesive.

Non-solvent adhesive: A polyisocyanate component, LA7735 (manufactured by Henkel Japan Ltd.), and a polyol component, LA6159 (manufactured by Henkel Japan Ltd.), were mixed at a mass ratio of 100:45 in a two-component mixing and feeding device to obtain a two-component curing urethane-based adhesive. The application of the urethane-based adhesive by the laminator for solventless adhesives was performed under the conditions of a processing speed of 100 m/min and a doctor roll and coating roll temperature of 60°C, so that the coating amount of the adhesive was 2.1 g/m².

### <Anchor Coat Layer>

Acrylic polyol (ACRYDIC CL-1000, manufactured by DIC Corporation) and an isocyanate-based compound (TDI type curing agent Coronate 2030, manufactured by Tosoh Corporation) were mixed so that the solid content mass ratio was 6:4. Next, ethyl acetate was added to dilute the mixture so that the solid content became 2 mass%, to obtain a coating liquid for forming an anchor coat layer. After subjecting one side of the surface layer side of the multilayer polyethylene film of each Example and each Comparative Example to a corona treatment, the coating liquid for forming an anchor coat layer was applied to the corona-treated surface using a gravure printing machine to form a coating film, which was then dried in an oven at 60°C for 10 seconds to form an anchor coat layer with a thickness of 0.1 µm.

### <Inorganic Oxide Layer>

When the inorganic oxide was silicon oxide, a transparent inorganic oxide layer (silicon oxide film) made of silicon oxide with a thickness of 30 nm was formed by a vacuum deposition apparatus using an electron beam heating method. The silicon oxide film had an O/Si ratio of 1.8.

When the inorganic oxide was aluminum oxide, a transparent inorganic oxide layer (aluminum oxide film) made of aluminum oxide with a thickness of 15 nm was formed by a vacuum deposition apparatus using an electron beam heating method. The aluminum oxide film had an O/Al ratio of 1.5.

### <Gas Barrier Coating Layer>

### (Organic-Inorganic Composite Coating Film)

An aqueous solution in which polyvinyl alcohol resin (PVA, Poval PVA-105 manufactured by Kuraray Co., Ltd., degree of saponification 98-99%, degree of polymerization 500) was dissolved, tetraethoxysilane (TEOS), and γ-glycidoxypropyltrimethoxysilane (GPTMS, KBM-403 manufactured by Shin-Etsu Chemical Co., Ltd.) were each prepared as an aqueous solution hydrolyzed with 0.02 mol/L hydrochloric acid. Next, the three aqueous solutions were mixed so that the mass ratio before hydrolysis of PVA, TEOS, and GPTMS was PVA:TEOS:GPTMS = 40:50:10. Next, isopropyl alcohol was added to the mixed aqueous solution to dilute it so that the mass ratio of water to isopropyl alcohol was 90:10, to obtain a coating liquid for forming an organic-inorganic composite coating film (solid content: 5 mass%). On the inorganic oxide layer, the mixed liquid for an organic-inorganic composite coating film was applied using a gravure printing machine to form a coating film, which was then dried in an oven at 60°C for 10 seconds to form a gas barrier coating layer made of an organic-inorganic composite coating film with a thickness of 0.3 µm.

### (Polyvalent Metal Salt of Polycarboxylic Acid Coating Film)

To 20 parts by mass of an aqueous polyacrylic acid solution (Aron A-10H, manufactured by Toagosei Co., Ltd., number-average molecular weight 200,000, solid content concentration 25 mass%), 58.9 parts by mass of distilled water was added for dilution. Next, 0.44 parts by mass of aminopropyltrimethoxysilane (APTMS, manufactured by Aldrich) was added and stirred to obtain a uniform mixed liquid for A-coating film mainly composed of a polycarboxylic acid-based polymer.

100 parts by mass of an aqueous dispersion of zinc oxide fine particles (ZE143, manufactured by Sumitomo Osaka Cement Co., Ltd.) and 2 parts by mass of a curing agent (Liofol HAERTER UR 5889-21, manufactured by Henkel) were mixed to obtain a mixed liquid for B-coating film mainly composed of a polyvalent metal compound. On the inorganic oxide layer, the mixed liquid for A-coating film described below was applied using a gravure printing machine to form a coating film, which was then dried in an oven at 60°C for 10 seconds to form an A-coating film with a thickness of 0.2 µm. Furthermore, the mixed liquid for B-coating film was applied using a gravure printing machine to form a coating film, which was then dried in an oven at 60°C for 10 seconds to form a B-coating film with a thickness of 0.2 µm. Thereby, an oxygen barrier coating film made of a polyvalent metal salt of polycarboxylic acid coating film was formed.

### <Adhesive Layer>

### (Urethane-based Adhesive)

To 100 parts by mass of TAKELAC A525 (manufactured by Mitsui Chemicals, Inc.), 11 parts by mass of TAKENATE A52 (manufactured by Mitsui Chemicals, Inc.) and 84 parts by mass of ethyl acetate were mixed to obtain a urethane-based adhesive.

### (Gas Barrier Adhesive)

To 23 parts by mass of a solvent in which ethyl acetate and methanol were mixed at a mass ratio of 1:1, 16 parts by mass of Maxive C93T (manufactured by Mitsubishi Gas Chemical Company, Inc.) and 5 parts by mass of Maxive M-100 (manufactured by Mitsubishi Gas Chemical Company, Inc.) were mixed to obtain a gas barrier adhesive.

### <Complex Modulus>

The multilayer polyethylene film was embedded in a visible light-curable resin D-800. Next, the multilayer polyethylene film was cut perpendicular to the lamination direction with a diamond knife Microstar LH using an ultramicrotome Leica EM UC7. The exposed cross-section was subjected to a finishing treatment under the conditions of a cutting thickness Feed of 100 nm and a cutting speed Speed of 1 mm/s to prepare a measurement sample.

For the measurement, a Hysitron TI-Premier (trade name) manufactured by Bruker Japan K.K. was used as a measurement apparatus, and a Berkovich diamond indenter manufactured by Bruker Japan K.K. was used as an indenter. The measurement conditions were as follows.

Temperature: Room temperature (25°C).

Mode: Load control mode.

Indentation and unloading: Indentation was performed up to a load of 15 µN at an indentation speed of 1.5 µN/sec, then held at the maximum load for 5 seconds, followed by unloading at a speed of 1.5 µN/sec.

Measurement points: A shape image of the measurement sample cross-section was obtained by the shape measurement function of the measurement apparatus that scans the sample surface with the indenter, and 20 points were specified on the cross-section of the measurement sample from the shape image at intervals of 1 µm or more.

For the calculation of the complex modulus, the relationship between the contact depth of the indenter and the sample and the contact projected area was calibrated in advance using fused silica as a standard sample. Thereafter, the unloading curve in the 60 to 95% region of the maximum load during unloading was analyzed by the Oliver-Pharr method to calculate the complex modulus of the measurement sample. The measurement results are shown in Tables 7 to 12.

### <Degree of Molecular Orientation>

Using a microwave-type molecular orientation meter (trade name MOA-5012A, manufactured by Oji Scientific Instruments Co., Ltd.), the degree of molecular orientation of the molecular chains in the plane of the multilayer polyethylene film was measured by rotating the multilayer polyethylene film in a microwave polarized electric field. The measurement results are shown in Tables 7 to 12.

### [Evaluation]

### <Processing Stability>

The appearance of the gas barrier film after forming the gas barrier coating layer (or after forming the inorganic oxide layer for Examples and Comparative Examples where no gas barrier coating layer was formed) was visually confirmed, and the processing stability was evaluated based on the following evaluation criteria. The evaluation results are shown in Tables 7 to 12.
A: No wrinkles were observed in the appearance of the gas barrier film.
B: Slight wrinkles were observed in the appearance of the gas barrier film.
C: Many wrinkles were observed in the appearance of the gas barrier film.

### <Transparency>

A pattern was printed on the surface of the gas barrier coating layer side of the gas barrier film produced in each Example and each Comparative Example, and after dry laminating the above-mentioned urethane-based adhesive or the above-mentioned gas barrier adhesive using a multicoater TM-MC (manufactured by HIRANO TECSEED Co., Ltd.), it was cured at 40°C for 3 days to form an adhesive layer. After curing, LLDPE (polyethylene film, TUX MC-S manufactured by Mitsui Chemicals Tohcello, Inc., thickness 60 µm) was laminated to the adhesive layer to produce a multilayer body in which a gas barrier film/adhesive/LLDPE were laminated in this order. The printed pattern was visually confirmed from the multilayer polyethylene film side, and the transparency was evaluated based on the following evaluation criteria. The evaluation results are shown in Tables 7 to 12.
A: The pattern is clear.
C: The pattern is unclear.

### <Gas Barrier Property>

For the produced multilayer body, using an oxygen transmission rate measurement apparatus (trade name OXTRAN-2/20, manufactured by MOCON, Inc.), the oxygen transmission rate (cm³/(m²·day·atm)) of the produced multilayer body was measured in an atmosphere of 30°C and 70% RH in accordance with JIS K-7126-2 B method, and the gas barrier property was evaluated based on the following evaluation criteria. The evaluation results are shown in Tables 7 to 12.

### (Evaluation Criteria for Oxygen Transmission Rate)

A+: Oxygen transmission rate is less than 2 cm³/(m²·day·atm).
A: Oxygen transmission rate is 2 cm³/(m²·day·atm) or more and less than 5 cm³/(m²·day·atm).
A-: Oxygen transmission rate is 5 cm³/(m²·day·atm) or more and less than 10 cm³/(m²·day·atm).
B+: Oxygen transmission rate is 10 cm³/(m²·day·atm) or more and less than 20 cm³/(m²·day·atm).
B: Oxygen transmission rate is 20 cm³/(m²·day·atm) or more and less than 50 cm³/(m²·day·atm).
B-: Oxygen transmission rate is 50 cm³/(m²·day·atm) or more and less than 100 cm³/(m²·day·atm).
C: Oxygen transmission rate is 100 cm³/(m²·day·atm) or more.

### <Gas Barrier Property after Boiling Treatment>

The produced multilayer body was cut into two pieces of 15 cm × 10 cm size, and the two cut pieces of the multilayer body were stacked so that their sealant layers faced each other, and three sides were impulse-sealed in a pouch shape. 150 mL of water was put into the pouch as packaged goods, and the remaining one side was impulse-sealed to produce a pouch (packaging bag) sealed on four sides. The produced pouch was subjected to a boiling treatment at 95°C for 30 minutes in a boiling treatment apparatus. After the boiling treatment, the pouch was opened, the packaged goods were removed, and after sufficient drying, the oxygen transmission rate was measured by the above-described method to evaluate the gas barrier property. The evaluation results are shown in Tables 7 to 12.

### <Gas Barrier Property after Flexing>

The produced multilayer body was cut into a size of 295 mm (length) × 210 mm (width) to prepare a sample for evaluation. This sample was attached to the fixed head of a Gelbo Flex Tester (trade name: BE-1005, manufactured by Tester Sangyo Co., Ltd.) so as to form a cylinder with a diameter of 87.5 mm × 210 mm. Both ends of the sample were held, the initial grip distance was set to 175 mm, a twist of 440 degrees was applied with a stroke of 87.5 mm, and this reciprocating motion was repeated 10 times at a speed of 40 times/min to perform flexing. For the sample after flexing, the oxygen transmission rate was measured by the above-described method to evaluate the gas barrier property. The evaluation results are shown in Tables 7 to 12.

### <Adhesion>

A 15 mm wide strip-shaped test piece was cut out from the produced multilayer body. Using a Tensilon universal testing machine RTC-1250 from Orientec Co., Ltd., the heat seal layer and the multilayer polyethylene film were peeled apart, and the lamination strength was measured in accordance with JIS Z1707. The measurement of lamination strength was performed by 90° peel (normal state 90° peel) and 180° peel (normal state 180° peel), and in addition, with the peel interface wetted with water, 90° peel (wet 90° peel) and 180° peel (wet 180° peel) were performed, and the adhesion was evaluated based on the following evaluation criteria. The evaluation results are shown in Tables 7 to 12.
A: Lamination strength is 2 N/15 mm or more
B: Lamination strength is less than 2 N/15 mm

**[Table 7]**

| | | Example 1B | Example 2B | Example 3B | Example 4B | Example 5B | Example 6B | Example 7B |
|---|---|---|---|---|---|---|---|---|
| Resin | Surface layer | C | C | C | B | I | G | G+H (80:20) |
| | Intermediate layer | A | A | E | A | A | H | H |
| | Back layer | C | C+D (80:20) | C | B | 1 | G | G+H (80:20) |
| Density (g/cm³) | Surface layer | 0.950 | 0.950 | 0.950 | 0.944 | 0.926 | 0.941 | 0.945 |
| | Intermediate layer | 0.963 | 0.963 | 0.960 | 0.963 | 0.963 | 0.962 | 0.962 |
| | Back layer | 0.950 | 0.953 | 0.950 | 0.944 | 0.926 | 0.941 | 0.945 |
| Density of multilayer polyethylene film (g/cm³) | | 0.958 | 0.958 | 0.956 | 0.955 | 0.948 | 0.954 | 0.955 |
| Thickness ratio | Surface layer | 1 | 1 | 1 | 1 | 1 | 1 | 1 |
| | Intermediate layer | 3 | 3 | 3 | 3 | 3 | 3 | 3 |
| | Back layer | 1 | 1 | 1 | 1 | 1 | 1 | 1 |
| Percentage of intermediate layer thickness (%) | | 60 | 60 | 60 | 60 | 60 | 60 | 60 |
| Complex modulus (GPa) | Surface layer | 1.80 | 1.80 | 1.80 | 1.73 | 1.45 | 1.52 | 1.62 |
| | Intermediate layer | 2.27 | 2.27 | 2.38 | 2.27 | 2.27 | 2.14 | 2.14 |
| | Back layer | 1.80 | 1.89 | 1.80 | 1.73 | 1.45 | 1.52 | 1.62 |
| Gas barrier layer | Inorganic oxide layer | Silicon oxide | Silicon oxide | Silicon oxide | Silicon oxide | Silicon oxide | Silicon oxide | Silicon oxide |
| | Gas barrier coating layer | Present | Present | Present | Present | Present | Present | Present |
| Adhesive layer | | Urethane-based | Urethane-based | Urethane-based | Urethane-based | Urethane-based | Urethane-based | Urethane-based |
| Degree of molecular orientation MOR | | 1.06 | 1.06 | 1.06 | 1.06 | 1.06 | 1.05 | 1.06 |
| | Processing stability | A | A | A | A | A | A | A |
| | Transparency | A | A | A | A | A | A | A |
| | Oxygen barrier property | A+ | A+ | A+ | A+ | A+ | A+ | A+ |
| Evaluation | Oxygen barrier property after boiling treatment | A | A | A | A | A | A | A |
| | Oxygen barrier property after flexing | B+ | B+ | B+ | B+ | B+ | B+ | B+ |
| | Normal state 180° | A | A | A | A | A | A | A |
| | Wet state 180° | A | A | A | A | A | A | A |
| | Normal state 90° | A | A | A | A | A | A | A |
| | Wet state 90° | A | A | A | A | A | A | A |

**[Table 8]**

| | | Example 8B | Example 9B | Example 10B | Example 11B | Example 12B | Example 13B |
|---|---|---|---|---|---|---|---|
| Resin | Surface layer | C | C | c | C | C | C |
| | Intermediate layer | D | D | D | D | D | D |
| | Back layer | C | C | C | C | C | C |
| Density (g/cm³) | Surface layer | 0.950 | 0.950 | 0.950 | 0.950 | 0.950 | 0.950 |
| | Intermediate layer | 0.958 | 0.958 | 0.958 | 0.958 | 0.958 | 0.958 |
| | Back layer | 0.950 | 0.950 | 0.950 | 0.950 | 0.950 | 0.950 |
| Density of multilayer polyethylene film (g/cm³) | | 0.955 | 0.952 | 0.953 | 0.954 | 0.955 | 0.956 |
| Thickness ratio | Surface layer | 1 | 3 | 1 | 1 | 1 | 1 |
| | Intermediatie layer | 3 | 2 | 1 | 2 | 4 | 6 |
| | Back layer | 1 | 3 | 1 | 1 | 1 | 1 |
| Percentage of intermediate layer thickness (%) | | 60 | 25 | 33 | 50 | 67 | 75 |
| Complex modulus (GPa) | Surface layer | 1.80 | 1.80 | 1.80 | 1.80 | 1.80 | 1.80 |
| | Intermediate layer | 2.09 | 2.09 | 2.09 | 2.09 | 2.09 | 2.09 |
| | Back layer | 1.80 | 1.80 | 1.80 | 1.80 | 1.80 | 1.80 |
| Gas barrier layer | Inorganic oxide layer | Silicon oxide | Silicon oxide | Silicon oxide | Silicon oxide | Silicon oxide | Silicon oxide |
| | Gas barrier coating layer | Present | Present | Present | Present | Present | Present |
| Adhesive layer | | Urethane-based | Urethane-based | Urethane-based | Urethane-based | Urethane-based | Urethane-based |
| Degree of molecular orientation MOR | | 1.06 | 1.04 | 1.04 | 1.04 | 1.06 | 1.06 |
| | Processing stability | A | A | A | A | A | A |
| | Transparency | A | A | A | A | A | A |
| | Oxygen barrier property | A+ | A+ | A+ | A+ | A+ | A+ |
| Evaluation | Oxygen barrier property after boiling treatment | A | A- | A | A | A | A |
| | Oxygen barrier property after flexing | B+ | B+ | B+ | B+ | B+ | B+ |
| | Normal state 180° | A | A | A | A | A | A |
| | Wet state 180° | A | A | A | A | A | A |
| | Normal state 90° | A | A | A | A | A | A |
| | Wet state 90° | A | A | A | A | A | A |

**[Table 9]**

| | | Example 14B | Example 15B |
|---|---|---|---|
| Resin | Layer 1 | C | C |
| | Layer 2 | D | D |
| | Layer 3 | D | D |
| | Layer 4 | D | D |
| | Layer 5 | C | D |
| | Layer 6 | - | D |
| | Layer 7 | - | C |
| Density (g/cm³) | Layer 1 | 0.950 | 0.950 |
| | Layer 2 | 0.958 | 0.958 |
| | Layer 3 | 0.958 | 0.958 |
| | Layer 4 | 0.958 | 0.958 |
| | Layer 5 | 0.950 | 0.958 |
| | Layer 6 | - | 0.958 |
| | Layer 7 | - | 0.950 |
| Density of multilayer polyethylene film (g/cm³) | | 0.955 | 0.956 |
| Thickness ratio | Layer 1 | 1 | 1 |
| | Layer 2 | 1 | 1 |
| | Layer 3 | 1 | 1 |
| | Layer 4 | 1 | 1 |
| | Layer 5 | 1 | 1 |
| | Layer 6 | - | 1 |
| | Layer 7 | - | 1 |
| Percentage of intermediate layer thickness (%) | | 60.0 | 71.4 |
| Complex modulus (GPa) | Surface layer | 1.80 | 1.80 |
| | Intermediate layer | 2.09 | 2.09 |
| | Back layer | 1.80 | 1.80 |
| Gas barrier layer | Inorganic oxide layer | Silicon oxide | Silicon oxide |
| | Gas barrier property Coating layer | Present | Present |
| Adhesive layer | | Urethane-based | Urethane-based |
| Degree of molecular orientation MOR | | 1.06 | 1.06 |
| | Processing stability | A | A |
| | Transparency | A | A |
| | Oxygen barrier property | A+ | A+ |
| Evaluation | Oxygen barrier property after boiling treatment | A | A |
| | Oxygen barrier property after flexing | B+ | B+ |
| | Normal state 180° | A | A |
| | Wet state 180° | A | A |
| | Normal state 90° | A | A |
| | Wet state 90° | A | A |

**[Table 10]**

| | | Example 16B | Example 17B | Example 18B |
|---|---|---|---|---|
| Resin | Surface layer | C | C | C |
| | Intermediate layer | D | D | D |
| | Back layer | C | C | C |
| Density (g/cm³) | Surface layer | 0.950 | 0.950 | 0.950 |
| | Intermediate layer | 0.958 | 0.958 | 0.958 |
| | Back layer | 0.950 | 0.950 | 0.950 |
| Density of multilayer polyethylene film (g/cm³) | | 0.955 | 0.955 | 0.955 |
| Thickness ratio | Surface layer | 1 | 1 | 1 |
| | Intermediate layer | 3 | 3 | 3 |
| | Back layer | 1 | 1 | 1 |
| Percentage of intermediate layer thickness (%) | | 60 | 60 | 60 |
| Complex modulus (GPa) | Surface layer | 1.80 | 1.80 | 1.80 |
| | Intermediate layer | 2.09 | 2.09 | 2.09 |
| | Back layer | 1.80 | 1.80 | 1.80 |
| Gas barrier layer | Inorganic oxide layer | Aluminum oxide | Silicon oxide | Silicon oxide |
| | Gas barrier coating layer | Yes | No | No |
| Adhesive layer | | Urethane-based | Urethane-based | Epoxy-based |
| Degree of molecular orientation MOR | | 1.02 | 1.02 | 1.06 |
| | Processing stability | A | A | A |
| | Transparency | A | A | A |
| | Oxygen barrier property | A+ | A | A+ |
| | Oxygen barrier property after boiling treatment | A | A- | A+ |
| Evaluation | Oxygen barrier property after flexing | B+ | B | A- |
| | Normal state 180° | A | A | A |
| | Wet state 180° | A | A | A |
| | Normal state 90° | A | A | A |
| | Wet state 90° | A | A | A |

**[Table 11]**

| | | | | | |
|---|---|---|---|---|---|
| Resin | Surface layer | C | C | C | C |
| | Intermediate layer | D | D | D | D |
| | Back layer | C | C | C | C |
| Density (g/cm³) | Surface layer | 0.950 | 0.950 | 0.950 | 0.950 |
| | Intermediate layer | 0.958 | 0.958 | 0.958 | 0.958 |
| | Back layer | 0.950 | 0.950 | 0.950 | 0.950 |
| Density of multilayer polyethylene film (g/cm³) | | 0.955 | 0.955 | 0.955 | 0.955 |
| Thickness ratio | Surface layer | 1 | 1 | 1 | 1 |
| | Intermediate layer | 3 | 3 | 3 | 3 |
| | Back layer | 1 | 1 | 1 | 1 |
| Percentage of intermediate layer thickness (%) | | 60 | 60 | 60 | 60 |
| Complex modulus (GPa) | Surface layer | 1.80 | 1.80 | 1.80 | 1.80 |
| | Intermediate layer | 2.09 | 2.09 | 2.09 | 2.09 |
| | Back layer | 1.80 | 1.80 | 1.80 | 1.80 |
| Gas barrier layer | Inorganic oxide layer | Silicon oxide | Silicon oxide | Silicon oxide | Silicon oxide |
| | Gas barrier coating layer | Present | Present | Absent | Present |
| Adhesive layer | | Urethane-based | Urethane-based | Epoxy-based | Urethane-based |
| Second adhesive layer | | Urethane-based | Non-solvent | Epoxy-based | Urethane-based |
| Surface base material | | Unstretched PE | Unstretched PE | Unstretched PE | Stretched PE |
| Degree of molecular orientation MOR | | 1.06 | 1.04 | 1.05 | 1.06 |
| | Processing stability | A | A | A | A |
| | Transparency | A | A | A | A |
| | Oxygen barrier property | A+ | A+ | A+ | A+ |
| | Oxygen barrier property after boiling treatment | A | A | A+ | A |
| Evaluation | Oxygen barrier property after flexing | B+ | B+ | A- | B+ |
| | Normal state 180° | A | A | A | A |
| | Wet state 180° | A | A | A | A |
| | Normal state 90° | A | A | A | A |
| | Wet state 90° | A | A | A | A |

**[Table 12]**

| | | Comparative Example 1B | Comparative Example 2B | Comparative Example 3B | Comparative Example 4B | Comparative Example 5B | Comparative Example 6B | Comparative Example 7B | Comparative Example 8B | Comparative Example 9B |
|---|---|---|---|---|---|---|---|---|---|---|
| Resin | Surface layer | A | E | G | F | F | C | A | A | A |
| | Intermediate layer | C | E | G | H | F | D | A | A | A |
| | Back layer | A | C | G | F | F | C | A | A | A |
| Density (g/cm³) | Surface layer | 0.963 | 0.96 | 0.941 | 0.92 | 0.92 | 0.95 | 0.963 | 0.963 | 0.963 |
| | Intermediate layer | 0.95 | 0.96 | 0.941 | 0.962 | 0.92 | 0.958 | 0.963 | 0.963 | 0.963 |
| | Back layer | 0.963 | 0.95 | 0.941 | 0.92 | 0.92 | 0.95 | 0.963 | 0.963 | 0.963 |
| Density of multilayer polyethylene film (g/cm³) | | 0.9552 | 0.958 | 0.941 | 0.9452 | 0.92 | 0.9548 | 0.963 | 0.963 | 0.963 |
| Thickness ratio | Surface layer | 1 | 1 | 1 | 1 | 1 | 1 | 1 | 1 | 1 |
| | Intermediate layer | 3 | 3 | 3 | 3 | 3 | 3 | 3 | 3 | 3 |
| | Back layer | 1 | 1 | 1 | 1 | 1 | 1 | 1 | 1 | 1 |
| Percentage of intermediate layer thickness (%) | | 60 | 60 | 60 | 60 | 60 | 60 | 60 | 60 | 60 |
| Complex modulus (GPa) | Surface layer | 2.27 | 2.38 | 1.52 | 0.71 | 0.71 | 1.80 | 2.27 | 2.27 | 2.27 |
| | Intermediate layer | 1.80 | 2.38 | 1.52 | 2.14 | 0.71 | 2.09 | 2.27 | 2.27 | 2.27 |
| | Back layer | 2.27 | 1.80 | 1.52 | 0.71 | 0.71 | 1.80 | 2.27 | 2.27 | 2.27 |
| Gas barrier layer | Inorganic oxide layer | Silicon oxide | Silicon oxide | Silicon oxide | Silicon oxide | Silicon oxide | Silicon oxide | Silicon oxide | Silicon oxide | Silicon oxide |
| | Gas barrier coating layer | Present | Present | Present | Present | Present | Present | Present | Absent | Absent |
| Adhesive layer | | Urethane-based | Urethane-based | Urethane-based | Urethane-based | Urethane-based | Urethane-based | Urethane-based | Urethane-based | Epoxy-based |
| Degree of molecular orientation MOR | | 1.06 | 1.06 | 1.06 | 1.05 | 1.05 | 1.15 | 1.04 | 1.02 | 1.06 |
| | Processing stability | c | A | C | B | C | A | A | A | A |
| | Transparency | C | C | A | A | Λ | A | C | C | C |
| | Oxygen barrier property | B+ | A- | A- | A- | A- | A | A- | B+ | A- |
| | Oxygen barrier property after boiling treatment | B | B+ | B | B | B | A- | B+ | B- | B- |
| Evaluation | Oxygen barrier property after flexing | B- | B | B | B | B | B- | B | B- | B |
| | Normal state 180° | A | A | A | A | A | B | A | A | A |
| | Wet state 180° | A | A | A | A | A | B | A | A | A |
| | Normal state 90° | A | A | A | A | A | B | A | A | A |
| | Wet state 90° | A | A | A | A | A | B | A | A | A |

### Reference Signs List

10, 30, 40, 50, 60... multilayer polyethylene film, 11, 31, 41, 51, 61... surface layer, 12, 32, 42, 52, 62... intermediate layer, 13, 33, 43, 53, 63... back layer, 20... gas barrier layer, 21... inorganic oxide layer, 22... gas barrier coating layer, 100, 200, 300... gas barrier film, 130... adhesive layer, 140... sealant layer, 170... second adhesive layer, 180... base material, 400, 500, 600, 700... multilayer body.

## Claims

1. A gas barrier film having a laminated structure comprising a multilayer polyethylene film and a gas barrier layer, wherein
the multilayer polyethylene film has a surface layer, an intermediate layer, and a back layer in this order, the surface layer being provided between the intermediate layer and the gas barrier layer,
the surface layer is composed of a medium-density polyethylene resin or a high-density polyethylene resin having a density of 0.926 g/cm³ or more,
a complex modulus of the surface layer and the back layer is 1.45 GPa or more and less than 1.90 GPa,
a complex modulus of the intermediate layer is 1.80 GPa or more and less than 2.50 GPa, and
the gas barrier layer has at least one of an inorganic oxide layer and a gas barrier coating layer.

2. The gas barrier film according to claim 1, wherein a density of the multilayer polyethylene film is 0.940 g/cm³ or more.

3. The gas barrier film according to claim 1, wherein
the gas barrier layer has the inorganic oxide layer, and
the inorganic oxide layer comprises at least one of aluminum oxide and silicon oxide.

4. The gas barrier film according to claim 1, wherein
the gas barrier layer has the gas barrier coating layer, and
the gas barrier coating layer comprises a water-soluble polymer and at least one selected from the group consisting of a metal alkoxide, a hydrolysate thereof, and a reaction product thereof.

5. The gas barrier film according to claim 1, wherein
the gas barrier layer has the gas barrier coating layer, and
the gas barrier coating layer comprises at least one selected from the group consisting of a silane coupling agent, a hydrolysate thereof, and a reaction product thereof.

6. The gas barrier film according to claim 1, wherein
the gas barrier layer has the gas barrier coating layer, and
the gas barrier coating layer comprises a polyvalent metal salt of carboxylic acid.

7. The gas barrier film according to claim 1, wherein a ratio of a thickness of the intermediate layer to a total thickness of the surface layer and the back layer is 0.5 or more.

8. The gas barrier film according to claim 1, wherein a thickness of the intermediate layer is 33% or more of a thickness of the multilayer polyethylene film.

9. The gas barrier film according to claim 1, wherein a temperature indicated by a maximum value of a melting peak observed in differential scanning calorimetry of the multilayer polyethylene film is more than 129°C and less than 136°C.

10. A multilayer body comprising:
the gas barrier film according to any one of claims 1 to 9;
an adhesive layer disposed on a surface of the gas barrier layer opposite the multilayer polyethylene film; and
a sealant layer disposed via the adhesive layer, wherein
an absolute value of a degree of molecular orientation of the multilayer polyethylene film is less than 1.07.

11. The multilayer body according to claim 10, wherein a content of polyethylene resin in the multilayer body is 90 mass% or more based on a total amount of the multilayer body.

12. The multilayer body according to claim 10, further comprising a gas barrier coating layer on a surface of the inorganic oxide layer on the sealant layer side.

13. The multilayer body according to claim 10, wherein the adhesive layer comprises a gas barrier adhesive.

14. The multilayer body according to claim 10, further comprising:
a second adhesive layer disposed on a surface of the multilayer polyethylene film on the back layer side; and
a base material disposed via the second adhesive layer.

15. A packaging material comprising the multilayer body according to claim 10.
